# EUROPEAN PATENT SPECIFICATION

(11) **EP 3 260 505 B1**
(45) Date of publication and mention of the grant of the patent: **06.11.2019**
(21) Application number: 16175598.8
(22) Date of filing: 22.06.2016
(51) Int. Cl.: B41M 5/00, C09D 11/101, C09D 11/322, C09D 11/38, C09D 11/40

(54) **METHODS OF MANUFACTURING PACKAGING FOR FOOD, COSMETICS AND PHARMA**
VERFAHREN ZUR HERSTELLUNG VON VERPACKUNGEN FÜR LEBENSMITTEL, KOSMETIKA UND PHARMAZEUTIKA
PROCÉDÉS DE FABRICATION D'EMBALLAGE POUR PRODUITS ALIMENTAIRES, COSMÉTIQUES ET PHARMACEUTIQUES

(43) Date of publication of application: 27.12.2017
(73) Proprietor: AGFA NV, 2640 Mortsel (BE)
(72) Inventor: LAMPROYE, Rudi, 2640 Mortsel (BE)
(74) Representative: Strijckers, Hans Louis P.

(56) References cited:
- EP-A1- 2 671 722
- EP-A1- 2 848 659

## Description

### Technical Field

The present invention relates to methods of manufacturing a packaging for food, cosmetics and pharma using inkjet printing technology.

### Background Art

Flexographic printing systems are being increasingly replaced for packaging applications by industrial inkjet printing systems due to their increased reliability and their flexibility in use, such as variable data printing allowing even last minute changes in the appearance of packaging when the inkjet printing system is incorporated into a manufacturing line. Radiation curable inkjet inks are particularly preferred because high quality images can be printed on non-absorbing ink-receivers, such as plastic packaging materials.

High reliability of inkjet printing on food packaging is not only required for reasons of productivity in an industrial environment, but also for safety reasons. The European Printing Ink Association (EuPIA) provides GMP guidelines for food packaging printing inks. In Europe most of the attention today is going to the Swiss legislation ("Ordinance on Materials and Articles in Contact with Food", SR 817.023.21), promulgating a positive list of ink compounds that may be included under certain conditions. A key figure in the allowable level of migration and/or set-off for ink compounds is 10 µg/ 6 dm² (6 dm² is the typical surface area of packaging material for 1 kg of food) per ink compound. This ratio of 10 µg / 1 kg of food is also described as 10 ppb and is the rule-of-thumb for the allowable migration limit for an ink compound in the majority of legislations, but this limit can be higher, when substantiated by sufficient toxicological data.

For food, cosmetics and pharma packaging, so-called "low migration" UV curable inkjet inks have been designed wherein the amount of migrateable compounds after UV curing is minimized. Such low migration inkjet inks are exemplified in EP 2053101 A (AGFA), EP 2671722 A (AGFA) and WO 2016/007593 A (SUN CHEMICAL) .These low migration inkjet inks generally use polymerizable chemistry based on acrylates, which allows for very fast curing and minimizing migrateables.

The capability of variable data printing via the inkjet technology is not only eagerly used by brand owners for cost effective short runs and to increase sales of consumer goods by offering more variations (more languages, colours, flavours, allergen free, etc) increasing emotional engagement with the product, but is now also offered to the public for the personalization of packages. Internet based stores for ordering a printed product have been known since 1995. The company Vistaprint enabled a print buyer to design a business card using one out of a predetermined set of templates in combination with text fields that he could customize and edit. Another internet based print order system is exemplified by US 7076450 (LOPEZ PRINTING)).

However, these new possibilities for marketing and personalization also pose health risks when printed packaging for food, cosmetics or pharma is in play. Inkjet printing may be performed in different countries on different types of inkjet printing systems using different types of inkjet ink and packaging substrates. It goes without saying that without a decent quality control system undesired ink components may migrate into the packaging for food, cosmetics or pharma.

WO 2016/009244 A (QUALISKILLS) discloses a low migration printing process for overprinting a pre-printed foil on a blister package involving a step of performing a quality check on a captured image and discarding the overprinted blister package if quality problems are detected. However, a quality system based on trial-and-error is uneconomical and time consuming. EP-A-2 848 659 describes an ink-jet printed packaging for food.

Hence, there is still a need for improved manufacturing methods where packaging for food, cosmetics and pharmaceuticals is inkjet printed in an economical way without migrateables posing health risks even when use is made of different types of inkjet printing systems, inkjet inks and/or packaging substrates.

### Summary of invention

In order to overcome the problems described above, preferred embodiments of the present invention have been realized with a method of manufacturing a packaging for food, cosmetics or pharma as in claim 1.

It was found that by splitting up a print job in an image intent part (i.e. the image or graphical design to be printed on the packaging) and a manufacturing intent part that a manufacturing method was obtained wherein health safety risks could be anticipated and minimized. A print validation server was able to predict the amount of migrateables on the basis of the characteristics of the selected inkjet printer, e.g. printing speed and UV curing dose, of the packaging substrate, e.g. a 50 µm thick PET substrate or a 100 µm thick PP substrate, and of the characteristics of the inkjet inks, e.g. type of ink components, colorant concentration, etc. A print validation server comprises a memory which contains data on the amount of extractables effectively determined for a specific inkjet printed packaging substrate depending on the inkjet printer (includes the print mode such as the UV curing dose), the packaging substrate and the inkjet inks used. For the sake of clarity, the term extractables roughly corresponds to the term migrateables from the inkjet inks, but may be broader as it may also include compounds extracted from the packaging substrate itself. Based on this data in the memory of the print validation server, a safety limit for extractables can be calculated depending on the image intent part and the ink coverage required for each inkjet ink to form that image on a certain inkjet printer and packaging substrate. The safety limit may be identical to the specific migration limit of the ink component, but for GMP reasons, a safety limit of e.g. 75% of the specific migration limit of the ink component is taken instead of the specific migration limit itself. The calculated safety limit is included, as such or as a reference code, in a set of meta-data for inkjet printing, so that it remains connected to the actual print job. For example, the safety limit as a reference code may be even incorporated in the image, e.g. as a barcode or a QR code, so that it can be retrieved even after printing. This has the advantage that even a third party can immediately verify if the safety limit was met. It will be immediately apparent if the image intent part leads to a value of extractables exceeding the specific migration limit that no safety limit can be calculated, and that an adaptation of the image intent part and/or the manufacturing intent part becomes necessary.

The present method has the advantage that a single server, the print validation server, is capable of driving different inkjet printers at multiple locations.

It is a further object of the present invention to provide an inkjet printed packaging for food, cosmetics or pharma containing in the image a 2D code. It was already stated above that the safety limit may be included in this 2D code.

These and other objects of the present invention will become apparent from the detailed description hereinafter.

### Brief description of drawings

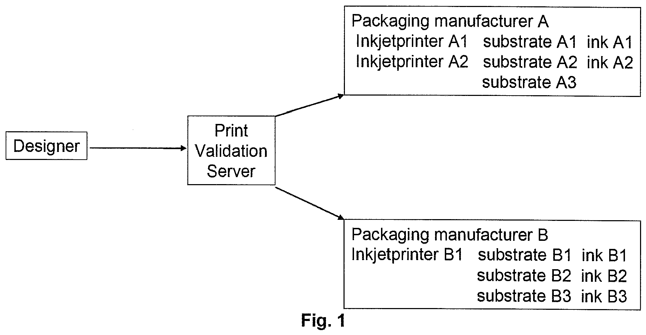

Figure 1 shows a flow chart wherein a designer defines a packaging definition onto a print validation server. The packaging definition stored on the print validation server includes an image intent part and a manufacturing intent part including characteristics of a packaging substrate, an inkjet printer and a plurality of inkjet inks. For example, the image intent part may be printed at packaging manufacturer A using substrate A2 and inkjet inks A1 and A2 on the inkjet printer A2, and alternatively the same image intent part may be printed at packaging manufacturer B using substrate B2 and inkjet inks B1 and B3 on the inkjet printer B1.

### Description of embodiments

### Definitions

The term "image" means all types of information such as drawings, photos, logos, patterns, 2D codes and alphanumerical information.

The term "monofunctional polymerizable compound" means that the polymerizable compound includes one polymerizable group.

The term "polyfunctional polymerizable compound" means that the polymerizable compound includes two or more polymerizable groups.

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms.

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, ester, amide, ether, thioether, ketone, aldehyde, sulfoxide, sulfone, sulfonate ester, sulphonamide, -CI, -Br, -I, -OH, -SH, - CN and -NO₂.

Unless otherwise specified a substituted or unsubstituted alkyl group is preferably a C₁ to C₆-alkyl group.

Unless otherwise specified a substituted or unsubstituted alkenyl group is preferably a C₁ to C₆-alkenyl group.

Unless otherwise specified a substituted or unsubstituted alkynyl group is preferably a C₁ to C₆-alkynyl group.

Unless otherwise specified a substituted or unsubstituted aralkyl group is preferably a phenyl or naphthyl group including one, two, three or more C₁ to C₆-alkyl groups.

Unless otherwise specified a substituted or unsubstituted alkaryl group is preferably a C₇ to C₂₀-alkyl group including a phenyl group or naphthyl group.

A cyclic group includes at least one ring structure and may be a monocyclic- or polycyclic group, the latter meaning one or more rings fused together.

A heterocyclic group is a cyclic group that has atoms of at least two different elements as members of its ring(s).The counterparts of heterocyclic groups are homocyclic groups, the ring structures of which are made of carbon only. Unless otherwise specified a substituted or unsubstituted heterocyclic group is preferably a five- or six-membered ring substituted by one, two, three or four heteroatoms, preferably selected from oxygen atoms, nitrogen atoms, sulfur atoms, selenium atoms or combinations thereof.

An alicyclic group is a non-aromatic homocyclic group wherein the ring atoms consist of carbon atoms.

The term heteroaryl group means a monocyclic- or polycyclic aromatic ring comprising carbon atoms and one or more heteroatoms in the ring structure, preferably, 1 to 4 heteroatoms, independently selected from nitrogen, oxygen, selenium and sulphur. Preferred examples of heteroaryl groups include, but are not limited to, pyridinyl, pyridazinyl, pyrimidyl, pyrazyl, triazinyl, pyrrolyl, pyrazolyl, imidazolyl, (1,2,3,)- and (1,2,4)-triazolyl, pyrazinyl, pyrimidinyl, tetrazolyl, furyl, thienyl, isoxazolyl, thiazolyl, isoxazolyl, and oxazolyl. A heteroaryl group can be unsubstituted or substituted with one, two or more suitable substituents. Preferably, a heteroaryl group is a monocyclic ring, wherein the ring comprises 1 to 5 carbon atoms and 1 to 4 heteroatoms. More preferably a substituted or unsubstituted heteroaryl group is preferably a five- or six-membered ring substituted by one, two or three oxygen atoms, nitrogen atoms, sulphur atoms, selenium atoms or combinations thereof.

Unless otherwise specified an unsubstituted aryl group is preferably a phenyl group or naphthyl group.

Unless otherwise specified an acyl group is preferably a -C(=O)-R group wherein R is selected from the group consisting of an optionally substituted alkyl group, an optionally substituted aryl group, an optionally substituted heteroaryl group, an optionally substituted alkenyl group, an optionally substituted alkynyl group, an optionally substituted alkaryl group and an optionally substituted aralkyl group.

SR 817.023.21 is Swiss legislation of food packaging printing inks and can be consulted on the internet via the following links: www.admin.ch/opc/de/classified-compilation/20050 179/ and the actual document of 23 November 2011 (Status on 1 April 2013): www.admin.ch/opc/de/classified-compilation/20050179/201304010000/817.023.21.pdf

### Manufacturing Methods

In a preferred embodiment of the invention, the method of manufacturing a packaging for food, cosmetics or pharma comprises the steps of:
- storing on a print validation server a packaging definition comprising an image intent part and a manufacturing intent part which includes characteristics of a packaging substrate, an inkjet printer and a plurality of inkjet inks including one or more SML-ink components and/or at least 20 wt% based on the total weight of inkjet ink of a vinyl ether acrylate according to Formula (I): 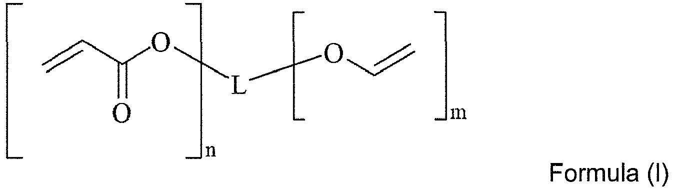 wherein,
   L represents a linking group comprising two to ten carbon atoms; and
   n and m independently represent a value from 1 to 5;
- rendering the image intent part according to characteristics of the manufacturing intent part to obtain a set of coloration separations;
- forming a set of meta-data including a safety limit of the one or more extractable SML-ink components and/or the extractable vinyl ether acrylate determined from the inkjet ink coverage required for each colour separation;
- transmitting one or more files containing the set of colour separations and the set of meta-data to an inkjet print server; and
- inkjet printing the set of coloration separations on the packaging substrate in the inkjet printer according to the set of meta-data;
wherein the SML-ink component is a compound of Section A or B in the Swiss legislation SR 817.023.21 of 23 November 2011 (Status on 1 April 2013).

The print validation server is preferably a remote server in a networked environment, such as "the cloud".

As illustrated by Figure 1, a packaging definition may be stored on a print validation server by a designer, which could be an employee in a marketing department of a consumer goods company or even a member of the public. For example, the latter person could enter a packaging definition defining drink cups and bottles for a wedding anniversary where each attendee has his/her own personalized cup and bottle carrying his/her name. The packaging definition would include a similar image intent part but a quite different manufacturing intent part. It could be that the drink cups are made at a first packaging manufacturer A using a polyethylene terephthalate substrate A1 on an inkjet printer A2, while the bottles are made at a second packaging manufacturer B using a polypropylene substrate B2, preferably already in the shape of the bottle, on an inkjet printer B1. The inkjet inks used at both packaging manufacturers may be different, but the customer expects that the images on the drink cups and bottles would be matching in colour and appearance. By storing the ink characteristics on the print validation server and using a colour management software program, it is possible to print matching colour images using different inkjet inks and taking into account the background colour of the substrates A1 and B2. Hence, the desired image by the designer is obtained by rendering the image intent part according to characteristics of the manufacturing intent part to obtain a set of coloration separations.

The designer is usually a person lacking any knowledge on food safety limits for inkjet printed packaging. Since the print validation server calculates the one or more safety limits upon the desired packaging definition from the designer, the print validation server is capable of immediately notifying the designer that a certain packaging definition is unsafe because, for example, the ink coverage is too high on a too thin packaging substrate even when fully cured on a specific inkjet printer. The latter allows for a number of iterations by the designer for adapting the packaging definition in an economical manner where little time is lost and still a desired result is obtained. The fast adaptation makes last minute changes in the appearance of packaging possible which can boost sales of a product. For example, the decisive goal scored in a soccer cup final can be depicted on a beverage bottle and made available one or a couple of days later in the supermarket.

The packaging definition is stored on the print validation server preferably under the form of a JDF file ("Job Definition Format"), which is an open, extensible, XML-based print workflow specification framework that is maintained by the CIP4 organization. In a JDF file, there is a provision for including meta-data. In the present invention, the characteristics of the manufacturing intent part of the packaging definition may be stored in this meta-part under the form of XML structured data. Such meta-data often include the inkjet printer identification, the packaging substrate identification, the inkjet ink identifications, as well as information on e.g. the number of packaging to be printed, embossing/cutting requirements, printer colour model, printing modes, and the like

The image intent part of a packaging definition, which is preferably in the form of a PDF or JPEG file, is rendered for a specific inkjet printer and the rendered image is stored on the print validation server in colour separation files, preferably TIFF files or another loss-less compressed format such as PNG files. The colour separation files contain the images as printable bitmaps and the colour separation files may already been rasterized by a half-toning method such error-diffusion half-toning method or amplitude modulation half-toning method or frequency modulation half-toning method. In another preferred embodiment, the colour separation files are not rasterized but are rasterized at the inkjet printer.

In a preferred embodiment the renderer is a PDF or PostScript based raster image processor.

In a preferred embodiment, the print validation server is enabled for generating a preview of the packaging definition as printed product to the designer, preferably remotely on a screen. For example, if the printed product is a plastic bottle with a label printed on it, the preview shows the complete bottle with the label on it. The bottle may be turned on the screen to preview it from different viewing angles. The latter may described as "digital packaging mockup".

In another preferred embodiment, the print validation server is enabled for previewing the safety limit by the designer remotely on a screen.

A set of meta-data is formed (= collected) on the print validation server which may include information regarding the inkjet printer on which the print job is to be printed, the packaging substrate on which the job is to be printed, the quality level with which the job is to be printed and the number of items that are to be printed. In the present invention, the meta-data includes a safety limit of the one or more extractable SML-ink components and/or the extractable vinyl ether acrylate determined from the inkjet ink coverage required for each colour separation.

One or more files containing the set of colour separations and the set of meta-data are then transmitted to an inkjet print server which controls the inkjet printing process on the inkjet printer. The inkjet printer then prints the set of coloration separations on the packaging substrate according to the set of meta-data.

In a preferred embodiment, the transmitting of one or more files containing the set of colour separations and the set of meta-data to an inkjet print server comprises the following steps:
- bundling the set of colour separations and the set of meta-data into a container file;
- transmitting the container file to an inkjet print server; and
- unbundling the container file on the inkjet print server into the set of colour separations and the set of meta-data.

In a preferred embodiment the colour separations and the meta-data are bundled in a MIME container file. MIME (Multipurpose Internet Mail Extensions) is a well-known format which is an Internet standard that originally was developed to extend the format of email. MIME has the benefit to bundle several types of content in one file. The bundling of the set of colour separations and the set of meta-data into a container file; such as MIME container file; is that all content can be sent in one go without the possibility of losing in the communication connection any of the content as defined in the container file. To use a standard defined container file, such as MIME, makes the invention beneficial for all kind of inkjet printers.

A step of comparing the safety limit with the amount of extractables determined on the inkjet printed packaging substrate may occur in a randomized manner. This means that during manufacturing an inkjet printed packaging is selected at random from the manufacturing lines for verifying that the safety limit is met by effectively determining the amount of extractables on the selected inkjet printed packaging .

The determination of the amount of extractables is preferably based on one or more SML-ink components and/or a vinyl ether acrylate according to Formula (I), more preferably at least a vinyl ether acrylate according to Formula (I), and most preferably at least 2-(2'-vinyloxyethoxy) ethyl acrylate.

For achieving high printing speeds, low viscous monomers are used so that a low viscosity for the radiation curable inkjet inks can be obtained. A popular low viscosity monomer is tetrahydrofurfuryl acrylate (THFA). However, it was found that a vessel of THFA kept at 40°C for 100 hours lost 40% of its weight. Printing heads in an inkjet printer usually operate at temperatures between 35 to 45°C. A high evaporation of THFA from an inkjet printed food packaging could falsely indicate that it is food safe. For example, depending on the environmental circumstances, such as the temperature of the inkjet printing room, in some cases a substantial amount of THFA would have evaporated, while other ink components with low evaporation remained extractable. Hence, for the safety limit preferably a low viscosity monomer exhibiting a small evaporation rate, such as a vinyl ether acrylate, is used. For example, it was found that 2-(2'-vinyloxyethoxy)ethyl acrylate (VEEA) kept at 40°C for 100 hours loses only 8% of its weight. If used in a substantial amount of at least 20 wt% based on the total weight of inkjet ink, a reliable safety limit could be set for the vinyl ether acrylate.

Another advantage of vinylether acrylates, like VEEA, is that it is a bifunctional monomer having two different polymerizable groups, namely an acrylate group and an ether group. This allows for a better control of the polymerization rate, whereby the amount of extractable and migrateable monomer can be reduced. Examples of suitable low migration inkjet inks containing VEEA are disclosed in EP 2053101 A (AGFA) .

The image intent part is rendered according to characteristics of the manufacturing intent part to obtain a set of coloration separations. For example, a specific printer could include either a CMYK inkjet ink set or otherwise the same ink set including further a low density cyan and magenta inkjet ink. It should be clear that inkjet printing with an ink set containing four or six inkjet inks results in different ink coverages and/or image quality. Rendering of the image intent part in the packaging definition can thus be optimized to minimize ink coverage and migrateables. In a preferred embodiment, colour management is optimized by taking the safety limits into account, if necessary even at the expense of colour gamut.

The safety limit may be included in the set of meta-data as a reference code. The reference code can be used to retrieve the safety limit from the print validation server.

In a preferred embodiment, the reference code is part of the image after the inkjet printing step. For example, the reference code may be present in a 2D code in the image. Preferred 2D codes include a barcode, a QR code, a datamatrix code, a cool-data-matrix code, an aztec code, an upcode, a trillcode, a quickmark code, a shot code, a mcode, a beetagg and the like. Examples of such 2D codes are illustrated here below.

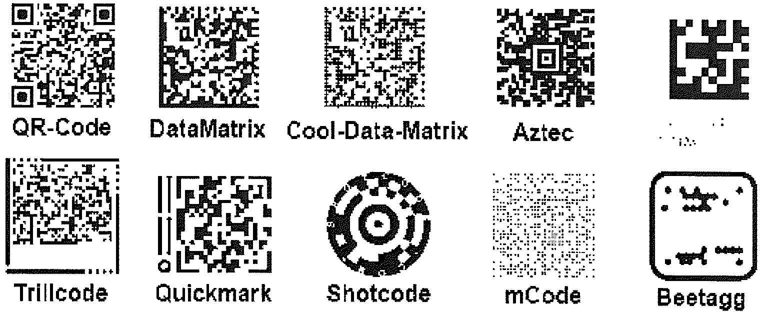

In a preferred embodiment, a tracking code for track-and-trace is included in a 2D code present in the image. The tracking code for track-and-trace may be included by the print validation server in the meta-data and/or at least one of the colour separation files. Alternatively it may be created in the inkjet print server and uploaded to the print validation server or another server. The tracking code for track-and-trace purposes can allow the retrieval of information on how the packaging was inkjet printed, such as the batch number of the inkjet inks, the specific printer used, the printing instructions, the batch number of the packaging substrate, and the like. Such a tracking code allows setting up a system for further minimizing health risks. For example, should a contaminant be found in the content of a food packaging, then the tracking code allows to find out what went wrong in the inkjet printing process and to take appropriate measures for preventing future occurrence.

### Packaging

The term "packaging for food, cosmetics or pharma" should be understood in its broadest meaning as encompassing a packaging of a substance intended for human or animal intake or administration. Food may be solid or liquid, for example, it encompasses also drinks like beer, soda, milk, vegetable oil, yoghourt and the like. There is also no limitation on the shape of the packaging for food, cosmetics or pharma. For example, food packaging may come in the shape of a cup, a bottle, a pouch, a box, a can, a carton, a wrapper and the like. Cosmetics encompass different solid or liquid products for cosmetical reasons that, for example, can be administered to human hair, such as a shampoo. Pharma packaging includes, for example, blister packaging, plastic bottles, pouches and bags for intravenous (IV) therapy.

The invention is advantageously used for "primary" food packaging. Primary food packaging is the material that first envelops the product and holds it. This usually is the smallest unit of distribution or use and is the package which is in direct contact with the contents. Secondary packaging is outside the primary packaging used to group primary packages together. Tertiary packaging is used for bulk handling, warehouse storage and transport shipping. The most common form of tertiary packaging is a palletized unit load that packs tightly into containers. Of course, for reasons of food safety, the invention may also be used for secondary and tertiary packaging.

A preferred inkjet printed packaging for food, cosmetics or pharma contains in an image a 2D code including a a reference code for retrieving a safety limit of a SML-ink component and/or an extractable vinyl ether acrylate according to Formula (I): 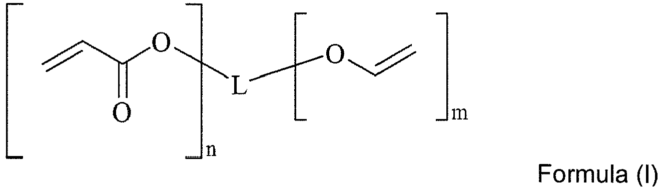 wherein,
L represents a linking group comprising two to ten carbon atoms; and
n and m independently represent a value from 1 to 5; and
wherein the SML-ink component is a compound of Section A or B in the Swiss legislation SR 817.023.21 of 23 November 2011 (Status on 1 April 2013).

The packaging substrate is preferably a substantially non-absorbing substrate, such as a plastic substrate.

Preferred substrates include surfaces or consist of polyethylene (PE), polypropylene (PP), polycarbonate (PC), polyvinyl chloride (PVC) and polyesters like polyethylene terephthalate (PET), polyethylene naphthalate (PEN), polylactide (PLA) and polyethyleenfuranoate (PEF).

The substrate may also be a paper based substrate coated with a thin metal or plastic foil. An example of the latter are the aseptic packages containing different layers of plastic and aluminium in addition to raw paper available from TETRA PAK.

The inkjet printed image may consist of a single continuous image or it may consist of a plurality of, optionally repeating, image parts. For example, on a plastic coffee cup the same image of the coffee brand may be printed on opposite sides of the coffee cup. The image parts may also be different. For example, a brand may be printed on the front side of a bottle, while the backside includes the above mentioned 2D code. Alternatively, the 2D code may also be incorporated into the front image itself.

### Print Validation Servers and Programs

The print validation server operates a program. Part or whole of the print validation server and/or the functional units or blocks thereof may be implemented in one or more circuits or circuitry, such as an integrated circuit(s) or as an LSI (large scale integration). Each functional unit or block of the print validation server may be individually made into an integrated circuit chip. Alternatively, part or whole of the functional units or blocks may be integrated and made into an integrated circuit chip.

A program which is operated in the print validation server according to various preferred embodiments of the present invention, is a program controlling a processor in order to realize functions of the various preferred embodiments according to the present invention. Therefore, information which is handled by the print validation server is temporarily accumulated in a RAM at the time of the processing. Thereafter, the information may be stored in various types of circuitry in the form of ROMs and HDDs, and read out by circuitry within, or included in combination with, the print validation server as necessary, and modification or write-in is performed thereto. As a recording medium storing the program, any one of a semiconductor medium (for example, the ROM, a non-volatile memory card or the like), an optical recording medium (for example, a DVD, an MO, an MD, a CD, a BD or the like), and a magnetic recording medium (for example, a magnetic tape, a flexible disc or the like) may be used. Moreover, by executing the loaded program, the functions of the various preferred embodiments of the present invention are not only realized, but the functions of preferred embodiments of the present invention may be realized by processing the loaded program in combination with an operating system or other application programs, based on an instruction of the program.

Moreover, in a case of being distributed in a market, the program can be distributed by being stored in the portable recording medium, or the program can be transmitted to a server computer which is connected through a network such as the Internet. In this case, a storage device of the server computer is also included in the present invention. In addition, a portion of a terminal device, a wireless base station, a host system, or other devices, or the whole thereof may be realized as an LSI which is typically an integrated circuit. Each functional unit or block of the print validation server may be individually chipped, or a portion thereof, or the whole thereof may be chipped by being integrated. In a case of making each functional block or unit as an integrated circuit, an integrated circuit controller that controls the integrated circuits, is added.

Finally, it should be noted that the description referring to "circuit" or "circuitry" is in no way limited to an implementation that is hardware only, and as persons of ordinary skill in the relevant art would know and understand, such descriptions and recitations of "circuit" or "circuitry" include combined hardware and software implementations in which the circuit or circuitry is operative to perform functions and operations based on machine readable programs, software or other instructions in any form that are usable to operate the circuit or circuitry.

A preferred aspect of the invention is a program for providing a reference code in order to retrieve a safety limit of a SML-ink component and/or an extractable vinyl ether acrylate according to Formula (I): 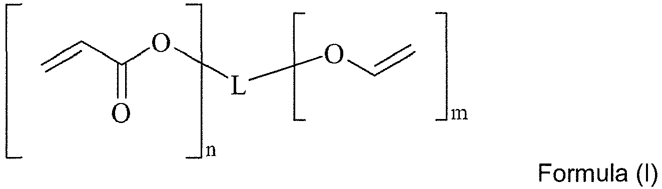 wherein,
L represents a linking group comprising two to ten carbon atoms; and
n and m independently represent a value from 1 to 5;
on an inkjet printed packaging for food, cosmetics or pharma containing in the image a 2D code including the tracking code or the reference code and wherein the SML-ink component is a compound of Section A or B in the Swiss legislation SR 817.023.21 of 23 November 2011 (Status on 1 April 2013).

A preferred aspect of the invention is a program to be operated by a print validation server that includes instructions for:
- storing on a print validation server a packaging definition comprising an image intent part and a manufacturing intent part including characteristics of a packaging substrate, an inkjet printer and a plurality of inkjet inks including one or more SML-ink components and/or at least 20 wt% based on the total weight of inkjet ink of a vinyl ether acrylate according to Formula (I): 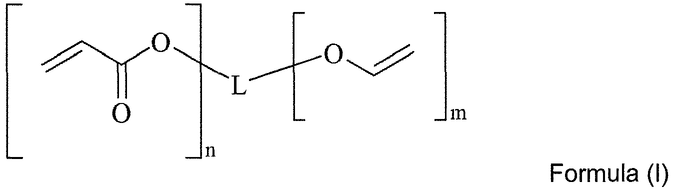 wherein,
   L represents a linking group comprising two to ten carbon atoms; and
   n and m independently represent a value from 1 to 5;
- rendering the image intent part according to characteristics of the manufacturing intent part to obtain a set of coloration separations;
- forming a set of meta-data including a safety limit of the one or more extractable SML-ink components and/or the extractable vinyl ether acrylate determined from the inkjet ink coverage required for each colour separation; and
- transmitting one or more files containing the set of colour separations and the set of meta-data to an inkjet print server;
wherein the SML-ink component is a compound of Section A or B in the Swiss legislation SR 817.023.21 of 23 November 2011 (Status on 1 April 2013).

### Inkjet Inks

The inkjet inks used for inkjet printing the set of coloration separations on the packaging substrate in the inkjet printer according to the set of meta-data may be aqueous based inkjet inks, such as polymeric latex based inkjet inks, but preferably they do not contain any solvents. In the latter case preferably radiation curable inkjet inks, more preferably UV curable inkjet inks are used. UV curable inkjet inks are particularly preferred because high quality images can be printed in a reliable, fast manner on non-absorbing ink-receivers, such as plastic packaging materials.

A plurality of coloured radiation curable inkjet inks combined into an inkjet ink set is capable of providing multicolour images. The radiation curable inkjet ink includes one or more colorants. Preferably the colorant is a colour pigment. The colour pigment is preferably dispersed in the liquid vehicle of the inkjet ink by a polymeric dispersant. The radiation curable inkjet ink may contain a dispersion synergist to improve the dispersion quality and stability of the ink. Preferably, at least the magenta ink contains a dispersion synergist. A mixture of dispersion synergists may be used to further improve dispersion stability.

For printing multi-colour images, preferably a radiation curable inkjet ink set is used containing at least two but preferably three, four or more coloured radiation curable inkjet inks. The UV curable inkjet ink set is preferably a radiation curable CMYK or CRYK inkjet ink set. This radiation curable inkjet ink set may also be extended with extra inks such as violet, green, red, blue, and/or orange to further enlarge the colour gamut of the image. The radiation curable inkjet ink set may also be extended by the combination of full density inkjet inks with light density inkjet inks. The combination of dark and light colour inks and/or black and grey inks improves the image quality by a lowered graininess.

The radiation curable inkjet ink set may also include a colourless radiation curable inkjet ink. A colourless radiation curable inkjet ink may be used as a primer or a varnish. A primer is usually applied for improving adhesion of an image printed with coloured radiation curable inkjet inks, while a varnish is usually applied for influencing the gloss or for providing a protective topcoat to the image.

The radiation curable inkjet ink set preferably also includes a radiation curable white inkjet ink. The radiation curable white inkjet ink preferably contains an inorganic white pigment, such as a titanium dioxide, more preferably a rutile pigment, having an average particle size larger than 180 nm.

White inkjet inks are generally used for so-called surface printing, where a white background is formed on a transparent substrate using a white ink and a colour image is printed thereon in order to improve the vibrancy of the printed colours.

In a preferred embodiment, the radiation curable inkjet ink contains an organic colour pigment in an amount of 6.0 to 13.0 wt% based on the total weight of the radiation curable inkjet ink, and has a viscosity of at least 16.0 mPa.s at 45°C and a shear rate of 10 s⁻¹. In a more preferred embodiment, a radiation curable inkjet ink set is composed of at least three different radiation curable inkjet inks containing an organic colour pigment in an amount of 6.0 to 13.0 wt% based on the total weight of the radiation curable inkjet ink, and each having a viscosity of at least 16.0 mPa.s at 45°C and a shear rate of 10 s⁻¹

The radiation curable inkjet ink is preferably a so-called 100% solids radiation curable inkjet ink. This means that no solvents, i.e. water or organic solvent, are present. However sometimes a small amount, generally less than 1 or 2 wt% of water based on the total weight of the inkjet ink, can be present. This water was not intentionally added but came into the inkjet ink via other components as a contamination, such as for example hydrophilic monomer.

The radiation curable inkjet ink preferably does not contain an organic solvent as this can penetrate through the packaging. But sometimes it can be advantageous to incorporate a small amount of an organic solvent to improve adhesion to the surface of a substrate after UV-curing. In this case, the added solvent can be any amount in the range that does not cause problems of solvent resistance and VOC. The UV curable inkjet ink preferably contains 0 to 10 wt%, more preferably no more than 5.0 wt% of an organic solvent based on the total weight of the UV curable inkjet ink.

A single polymerizable compound may be used for the polymerizable composition of the radiation curable inkjet ink, but usually a mixture of different polymerizable compounds to tune the ink properties, such as the adhesion to a set of substrates of the flexibility.

In one preferred embodiment of the radiation curable inkjet ink, the polymerizable compound includes one or more acrylate groups. These polymerizable compounds allow for very fast curing in many industrial applications. The polymerizable compound preferably includes a multifunctional hybrid monomer containing two or more different polymerizable groups per molecule, such as, for example both an acrylate group and a vinyl ether group. An especially useful monomer is 2-(2'-vinyloxyethoxy)ethyl acrylate (VEEA), although other hybrid monomers such as those described in WO 2010/029017 A (AGFA) and EP 2130817 A (AGFA) would also be suitable. Preferably, the radiation curable inkjet inks comprise more than 20 wt%; and more preferably more than 25 or 30 wt% of one or more hybrid multifunctional monomers, based on the total weight of polymerizable compounds.

For having a good ejecting ability, the viscosity of the radiation curable inkjet ink at the jetting temperature is preferably smaller than 50.0 mPa.s, more preferably smaller than 30.0 mPa.s at a shear rate of 10 s⁻¹ and a jetting temperature between 30 and 70°C.

The surface tension of the UV curable inkjet ink is preferably in the range of 20 mN/m to 30 mN/m at 25°C, more preferably in the range of about 22 mN/m to about 25 mN/m at 25°C. In these ranges, good ink spreading is obtained on a wide range of substrates.

The radiation curable inkjet inks may further also contain at least one inhibitor or stabilizer for improving the thermal stability of the ink.

The radiation curable inkjet inks may further also contain at least one surfactant for obtaining good spreading characteristics on a substrate.

The radiation curable inkjet inks are preferably free radical curable inkjet inks. It was found that cationically curable inkjet inks posed problems of jetting reliability due to UV stray light. UV stray light hitting the nozzle plate of an inkjet print head results into failing nozzles due to clogging by cured ink in the nozzle. Unlike free radical curable ink where radical species have a much shorter lifetime, a cationic curable ink continues to cure once an acid species has been generated by UV light in the nozzle. Hence free radical curable inkjet inks are also preferred here for reliable food safe inkjet printing of the packaging substrate.

### Photoinitiators and Co-initiators

The radiation curable inkjet ink preferably also contains an initiator. The initiator typically initiates the polymerization reaction. The initiator can be a thermal initiator, but is preferably a photoinitiator. The photoinitiator requires less energy to activate than the monomers, oligomers and/or prepolymers to form a polymer. If the free radical inkjet ink contains no initiator it can be cured by electron beam curing.

A UV curable inkjet ink contains a photoinitiator or a photoinitiating system comprising one or more photoinitiators and one or more co-initiators.

The photoinitiator in the curable inkjet ink is preferably a free radical initiator, more specifically a Norrish type I initiator or a Norrish type II initiator. A free radical photoinitiator is a chemical compound that initiates polymerization of monomers and oligomers when exposed to actinic radiation by the formation of a free radical. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or co-initiator. Both type I and type II photoinitiators can be used in the present invention, alone or in combination.

Suitable photoinitiators are disclosed in CRIVELLO, J.V., et al. Photoinitiators for Free Radical Cationic and Anionic Photopolymerization. 2nd edition. Edited by BRADLEY, G.. London, UK: John Wiley and Sons Ltd, 1998. p.287-294.

Specific examples of photoinitiators may include, but are not limited to, the following compounds or combinations thereof: benzophenone and substituted benzophenones, 1-hydroxycyclohexyl phenyl ketone, thioxanthones such as isopropylthioxanthone, 2-hydroxy-2-methyl-1-phenylpropan-1-one, 2-benzyl-2-dimethylamino- (4-morpholinophenyl) butan-1-one, benzil dimethylketal, bis (2,6- dimethylbenzoyl)-2,4,4-trimethylpentylphosphine oxide, 2,4,6 trimethylbenzoyldiphenylphosphine oxide, 2,4,6-trimethoxybenzoyldiphenylphosphine oxide, 2-methyl-1- [4-(methylthio) phenyl] -2-morpholinopropan-1-one, 2,2-dimethoxy-1, 2-diphenylethan-1-one or 5,7-diiodo-3- butoxy-6-fluorone.

Suitable commercial photoinitiators include Irgacure™ 184, Irgacure™ 500, Irgacure™ 369, Irgacure™ 1700, Irgacure™ 651, Irgacure™ 819, Irgacure™ 1000, Irgacure™ 1300, Irgacure™ 1870, Darocur™ 1173, Darocur™ 2959, Darocur™ 4265 and Darocur™ ITX available from CIBA SPECIALTY CHEMICALS, Lucerin™ TPO available from BASF AG, Esacure™ KT046, Esacure™ KIP150, Esacure™ KT37 and Esacure™ EDB available from LAMBERTI, H-Nu™ 470 and H-Nu™ 470X available from SPECTRA GROUP Ltd..

For a low migration radiation curable inkjet ink, the photoinitiator is preferably a so-called diffusion hindered photoinitiator. A diffusion hindered photoinitiator is a photoinitiator which exhibits a much lower mobility in a cured layer of the ink than a monofunctional photoinitiator, such as benzophenone. Several methods can be used to lower the mobility of the photoinitiator. One way is to increase the molecular weight of the photoinitiators so that the diffusion speed is reduced, e.g. polymeric photoinitiators. Another way is to increase its reactivity so that it is built into the polymerizing network, e.g. multifunctional photoinitiators (having 2, 3 or more photoinitiating groups) and polymerizable photoinitiators.

The diffusion hindered photoinitiator is preferably selected from the group consisting of non-polymeric multifunctional photoinitiators, oligomeric or polymeric photoinitiators and polymerizable photoinitiators. Non-polymeric di- or multifunctional photoinitiators are considered to have a molecular weight between 300 and 900 Dalton. Non-polymerizable monofunctional photoinitiators with a molecular weight in that range are not diffusion hindered photoinitiators. Most preferably the diffusion hindered photoinitiator is a polymerizable initiator or a polymeric photoinitiator.

A preferred diffusion hindered photoinitiator contains one or more photoinitiating functional groups derived from a Norrish type I-photoinitiator selected from the group consisting of benzoinethers, benzil ketals, α,α-dialkoxyacetophenones, α-hydroxyalkylphenones, α-aminoalkylphenones, acylphosphine oxides, acylphosphine sulphides, α-haloketones, α-halosulfones and phenylglyoxalates.

A preferred diffusion hindered photoinitiator contains one or more photoinitiating functional groups derived from a Norrish type II-initiator selected from the group consisting of benzophenones, thioxanthones, 1,2-diketones and anthraquinones.

Suitable diffusion hindered photoinitiators are also those disclosed in EP 2065362 A (AGFA) in paragraphs [0074] and [0075] for difunctional and multifunctional photoinitiators, in paragraphs [0077] to [0080] for polymeric photoinitiators and in paragraphs [0081] to [0083] for polymerizable photoinitiators.

Other preferred polymerizable photoinitiators are those disclosed in EP 2161264 A (AGFA). A preferred amount of photoinitiator is 0 - 50 wt%, more preferably 0.1 - 20 wt%, and most preferably 0.3 - 15 wt% of the total weight of the radiation curable ink.

In a very preferred embodiment, the radiation curable inkjet ink includes a polymerizable or polymeric thioxanthone photoinitiator and an acylphosphine oxide-based polymerization photoinitiator, more preferably a bis(2,4,6-trimethylbenzoyl)-phenylphosphineoxide photoinitiator.

Photoinitiators like bis(2,4,6-trimethylbenzoyl)-phenylphosphineoxide photoinitiator are monofunctional but are allowed by the Swiss ordinance SR 817.023.21 due to their very low toxicity level.

In order to increase the photosensitivity further, the radiation curable ink may additionally contain co-initiators. Suitable examples of co-initiators can be categorized in three groups: 1) tertiary aliphatic amines such as methyldiethanolamine, dimethylethanolamine, triethanolamine, triethylamine and N-methylmorpholine; (2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and (3) (meth)acrylated amines such as dialkylamino alkyl(meth)acrylates (e.g., diethylaminoethylacrylate) or N-morpholinoalkyl-(meth)acrylates (e.g., N-morpholinoethyl-acrylate).

The preferred co-initiators are aminobenzoates because a better stability of the radiation curable inkjet inks is obtained.

When one or more co-initiators are included into the radiation curable inkjet ink, preferably these co-initiators are diffusion hindered for safety reasons.

A diffusion hindered co-initiator is preferably selected from the group consisting of non-polymeric di- or multifunctional co-initiators, oligomeric or polymeric co-initiators and polymerizable co-initiators. More preferably the diffusion hindered co-initiator is selected from the group consisting of polymeric co-initiators and polymerizable co-initiators. Most preferably the diffusion hindered co-initiator is a polymerizable co-initiator having at least one (meth)acrylate group, more preferably having at least one acrylate group.

Some co-initiators, like ethylhexyl-4-dimethylaminobenzoate, are not diffusion hindered co-initiators but are allowed by the Swiss ordinance SR 817.023.21 on Objects and Materials due to their very low toxicity level. In a preferred embodiment, the radiation curable inkjet ink includes ethylhexyl-4-dimethylaminobenzoate as co-initiator.

The radiation curable inkjet ink preferably includes a polymerizable or polymeric tertiary amine co-initiator.

Preferred diffusion hindered co-initiators are the polymerizable co-initiators disclosed in EP 2053101 A (AGFA) in paragraphs [0088] and [0097].

Preferred diffusion hindered co-initiators include a polymeric co-initiator having a dendritic polymeric architecture, more preferably a hyperbranched polymeric architecture. Preferred hyperbranched polymeric co-initiators are those disclosed in US 2006014848 A (AGFA) .

The radiation curable inkjet ink preferably includes the (diffusion hindered) co-initiator in an amount of 0.1 to 50 wt%, more preferably in an amount of 0.5 to 25 wt%, most preferably in an amount of 1 to 15 wt% of the total weight of the inkjet ink.

In the manufacturing method of the present invention, the plurality of inkjet inks preferably contain at least one photoinitiator selected from the group consisting of an acylphosphine oxide photoinitiator and a polymerizable and polymeric thioxanthone photoinitiator. In a more preferred of the manufacturing method according to the invention, the acylphosphine oxide photoinitiator is preferably a polymerizable or polymeric acylphosphine oxide photoinitiator.

In a particularly preferred of the manufacturing method, the polymerizable thioxanthone photoinitiator is represented by Formula (II): 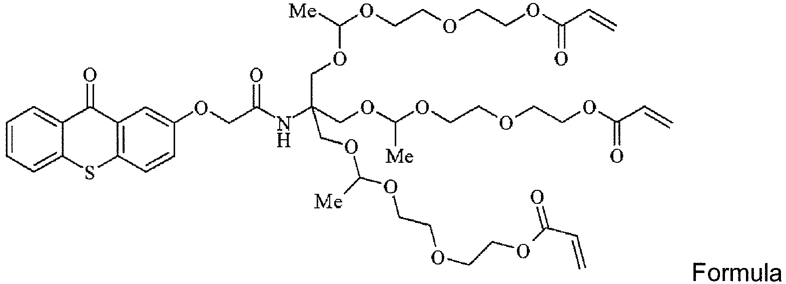 (II).

The use of acylphosphine oxide photoinitiators and/or thioxanthone photoinitiators allows for efficient UV curing using UV LEDs. UV curing by UV LEDs is preferred in the present invention as it simplifies the calculation of the safety limit. Until recently UV curable inkjet inks were cured using mercury lamps. However these UV lamps tend to deteriorate and lose UV light output over time. The latter necessitates taking the age of the mercury lamps into account when calculating the safety limit. UV LEDs tend to have a very long life time without any loss of UV output power. Hence, the inkjet printing of the set of coloration separations on a packaging substrate according to the set of meta-data is preferably performed using an inkjet printer containing UV LEDs for UV curing. The UV curing may consist of a pin curing step and a full curing step.

### Polymerizable Compounds

The radiation curable inkjet inks include one or more monomers and/or oligomers. Any monomer and oligomer capable of free radical polymerization may be used in the radiation curable inkjet inks. The monomers and oligomers may have different degrees of polymerizable functionality, and a mixture including combinations of mono-, di-, tri-and higher polymerizable functionality monomers may be used. The viscosity of the UV curable inkjet ink can be adjusted by varying the ratio between the monomers.

The monomers and oligomers used are preferably purified compounds having no or almost no impurities, more particularly no toxic or carcinogenic impurities. The impurities are usually derivative compounds obtained during synthesis of the polymerizable compound. Purification methods are well-known to those skilled in the art of manufacturing monomers and oligomers. Sometimes, however, some compounds may be added deliberately to pure polymerizable compounds in harmless amounts, for example, polymerization inhibitors or stabilizers.

Particularly preferred monomers and oligomers are those listed in [0106] to [0115] in EP 1911814 A (AGFA).

In a preferred embodiment, the radiation curable inkjet inks include at least one monomer selected from the group consisting of 3-methyl 1,5-pentanediol diacrylate, dipropyleneglycol diacrylate, trimethylolpropane triacrylate, ethoxylated trimethylolpropane triacrylate, and pentaerythritol tetraacrylate, and cyclic trimethylolpropane formal acrylate.

In a preferred embodiment, the radiation curable inkjet inks include a monomer including at least one acrylate group and at least one ethylenically unsaturated polymerizable group selected from the group consisting of allylether, allylester, allylcarbonate, vinyl ether, vinylester, vinylcarbonate, fumarate, and maleate. Preferred examples of such monomers are disclosed in EP 2053103 A (AGFA).

The radiation curable inkjet ink preferably include a vinylether acrylate monomer. Vinylether acrylate monomers allow preparing radiation curable compositions of extremely low viscosity.

The vinylether acrylate monomer is preferably a monomer represented by Formula (I): 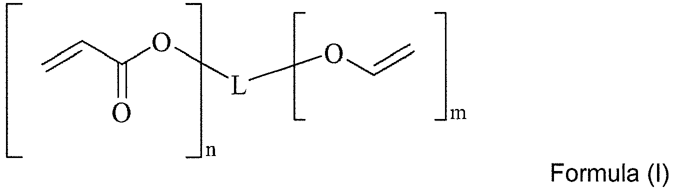 wherein,
L represents a linking group comprising two to ten carbon atoms; and
n and m independently represent a value from 1 to 5.

The radiation curable inkjet ink most preferably includes 2-(2'-vinyloxyethoxy)ethyl acrylate as vinylether acrylate monomer.

In a preferred embodiment, the vinylether (meth)acrylate monomer is present in the free radical curable inkjet ink in an amount of 20 wt% to 90 wt%, more preferably 25 wt% to 80 wt% and most preferably 30 wt% to 70 wt%, all based upon the total weight of the radiation curable inkjet ink.

In a particularly preferred embodiment, the polymerizable composition of the radiation curable inkjet ink consists essentially of: a) 25 - 100 wt% of one or more polymerizable compounds A having at least one acrylate group and at least one second ethylenically unsaturated polymerizable functional group selected from the group consisting of a vinyl ether group, an allylether group and a allylester group; b) 0 - 55 wt% of one or more polymerizable compounds B selected from the group consisting of monofunctional acrylates and difunctional acrylates; and c) 0 - 55 wt% of one or more polymerizable compounds C selected from the group consisting of trifunctional acrylates, tetrafunctional acrylates, pentafunctional acrylates and hexafunctional acrylates, with the proviso that if the weight percentage of compounds B > 24 wt%, then the weight percentage of compounds C > 1 wt%; and wherein all weight percentages of A, B and C are based upon the total weight of the polymerizable composition; and with the proviso that at least one polymerizable compound B or C is present in the polymerizable composition if the radiation curable inkjet ink contains no initiator. If no initiator is present the radiation curable inkjet inks may be cured by electron beam curing.

The radiation curable inkjet ink preferably includes 60 to 95 wt% of polymerizable compounds, more preferably 70 to 90 wt% of polymerizable compounds based upon the total weight of the radiation curable inkjet ink. A varnish may include up to 99 wt% of polymerizable compounds based upon the total weight of the radiation curable inkjet ink.

### Colorants

The coloured inkjet ink contains a colorant. Colorants used in the inkjet inks may be dyes, pigments or a combination thereof. Organic and/or inorganic pigments may be used.

The colorant is preferably a pigment or a polymeric dye, most preferably a colour pigment. In food packaging applications, low molecular weight dyes, e.g. smaller than 1000 Dalton, can still migrate into the food or be extracted by the food giving undesired coloration of the food, or even worse cause allergic reactions after consuming the solid or liquid food.

The pigments may be black, white, cyan, magenta, yellow, red, orange, violet, blue, green, brown, mixtures thereof, and the like. This colour pigment may be chosen from those disclosed by HERBST, Willy, et al. Industrial Organic Pigments, Production, Properties, Applications. 3rd edition. Wiley - VCH , 2004. ISBN 3527305769.

Particular preferred pigments are C.I. Pigment Yellow 1, 3, 10, 12, 13, 14, 17, 55, 65, 73, 74, 75, 83, 93, 97, 109, 111, 120, 128, 138, 139, 150, 151, 154, 155, 175, 180, 181, 185, 194 and 213.

Particular preferred pigments are C.I. Pigment Red 17, 22, 23, 41, 48:1, 48:2, 49:1, 49:2, 52:1, 57:1, 88, 112, 122, 144, 146, 149, 170, 175, 176, 184, 185, 188, 202, 206, 207, 210, 216, 221, 248, 251, 254, 255, 264, 266, 270 and 272.

Particular preferred pigments are C.I. Pigment Violet 19, 23, 32, and 37.

Particular preferred pigments are C.I. Pigment Blue 15:1, 15:2, 15:3, 15:4, 15:6, 16, 56, 61 and (bridged) aluminium phthalocyanine pigments.

Particular preferred pigments are C.I. Pigment Orange 5, 13, 16, 34, 40, 43, 59, 66, 67, 69, 71 and 73.

Particular preferred pigments are C.I. Pigment Green 7 and 36.

Particular preferred pigments are C.I. Pigment Brown 6 and 7.

Suitable pigments include mixed crystals of the above particular preferred pigments. Mixed crystals are also referred to as solid solutions. For example, under certain conditions different quinacridones mix with each other to form solid solutions, which are quite different from both physical mixtures of the compounds and from the compounds themselves. In a solid solution, the molecules of the components enter into the same crystal lattice, usually, but not always, that of one of the components. The x-ray diffraction pattern of the resulting crystalline solid is characteristic of that solid and can be clearly differentiated from the pattern of a physical mixture of the same components in the same proportion. In such physical mixtures, the x-ray pattern of each of the components can be distinguished, and the disappearance of many of these lines is one of the criteria of the formation of solid solutions. A commercially available example is Cinquasia™ Magenta RT-355-D from BASF AG.

Carbon black is preferred as a black pigment. Suitable black pigments include carbon blacks such as Pigment Black 7 (e.g. Carbon Black MA8® from MITSUBISHI CHEMICAL), Regal® 400R, Mogul® L, Elftex® 320 from CABOT Co., or Carbon Black FW18, Special Black 250, Special Black 350, Special Black 550, Printex® 25, Printex® 35, Printex® 55, Printex® 90, Printex® 150T from DEGUSSA. In a preferred embodiment, the carbon black pigment used is a pigment having less than 0.15% of toluene-extractable fraction using the method as described in section III, paragraph 5 of the Resolution AP(89) 1 dated 13 September 1989 published by the Council of Europe.

It is also possible to make mixtures of pigments. For example, in some inkjet ink application a neutral black inkjet ink is preferred and can be obtained e.g. by mixing a black pigment and a cyan pigment into the ink. Also pigments may be combined to enlarge the colour gamut of an ink set. The inkjet ink set may also include one or more spot colours. Silver and gold are often desired colours for making a product more attractive by giving it an exclusive appearance.

Also non-organic pigments may be present in the inks. Suitable pigments are C.I. Pigment Metal 1, 2 and 3. Illustrative examples of the inorganic pigments include titanium oxide, barium sulfate, calcium carbonate, zinc oxide, lead sulfate, yellow lead, zinc yellow, red iron oxide (III), cadmium red, ultramarine blue, prussian blue, chromium oxide green, cobalt green, amber, titanium black and synthetic iron black. However, care should be taken to prevent migration and extraction of heavy metals in food application. Preferably no pigments are used which contain a heavy metal selected from the group consisting of arsenic, lead, mercury and cadmium. In a more preferred embodiment, no inorganic pigments are used in the inkjet ink with the exception of titanium oxide or calcium carbonate for the optional white inkjet ink.

Pigment particles in inkjet ink should be sufficiently small to permit free flow of the ink through the inkjet-printing device, especially at the ejecting nozzles. It is also desirable to use small particles for maximum colour strength and to slow down sedimentation.

The numeric average pigment particle size is preferably between 0.050 and 1 µm, more preferably between 0.070 and 0.300 µm and particularly preferably between 0.080 and 0.200 µm. Most preferably, the numeric average pigment particle size is no larger than 0.150 µm. An average particle size smaller than 0.050 µm is less desirable for decreased lightfastness, but mainly also because very small pigment particles or individual pigment molecules thereof may still be extracted in food packaging applications.

The numeric average pigment particle size of pigment particles is best determined with a Brookhaven Instruments Particle Sizer BI90plus based upon the principle of dynamic light scattering. The ink is then diluted, for example, with ethyl acetate to a pigment concentration of 0.002 wt%. The measurement settings of the BI90plus are: 5 runs at 23°C, angle of 90°, wavelength of 635 nm and graphics = correction function.

In the case of a white inkjet ink, preferably a pigment with a refractive index greater than 1.60, preferably greater than 2.00, more preferably greater than 2.50 and most preferably greater than 2.60 is used. The white pigments may be employed singly or in combination.

Preferably titanium dioxide is used for the pigment with a refractive index greater than 1.60. Titanium oxide occurs in the crystalline forms of anatase type, rutile type and brookite type. The anatase type has a relatively low density and is easily ground into fine particles, while the rutile type has a relatively high refractive index, exhibiting a high covering power. Either one of these is usable in this invention. It is preferred to make the most possible use of characteristics and to make selections according to the use thereof. The use of the anatase type having a low density and a small particle size can achieve superior dispersion stability, ink storage stability and ejectability. At least two different crystalline forms may be used in combination. The combined use of the anatase type and the rutile type which exhibits a high colouring power can reduce the total amount of titanium oxide, leading to improved storage stability and ejection performance of ink.

For surface treatment of the titanium oxide, an aqueous treatment or a gas phase treatment is applied, and an alumina-silica treating agent is usually employed. Untreated-, alumina treated- or alumina-silica treated-titanium oxide are employable.

The numeric average particle diameter of the titanium oxide or other white pigments is preferably from 50 to 500 nm, more preferably from 150 to 400 nm, and most preferably from 200 to 350 nm. Sufficient hiding power cannot be obtained when the average diameter is less than 50 nm, and the storage ability and the jet-out suitability of the ink tend to be degraded when the average diameter exceeds 500 nm. The determination of the numeric average particle diameter is best performed by photon correlation spectroscopy at a wavelength of 633 nm with a 4mW HeNe laser on a diluted sample of the pigmented inkjet ink. A suitable particle size analyzer used was a Malvern™ nano-S available from Goffin-Meyvis. A sample can, for example, be prepared by addition of one drop of ink to a cuvette containing 1.5 mL ethyl acetate and mixed until a homogenous sample was obtained. The measured particle size is the average value of 3 consecutive measurements consisting of 6 runs of 20 seconds.

Generally pigments are stabilized in the dispersion medium by dispersing agents, such as polymeric dispersants or surfactants. However, the surface of the pigments can be modified to obtain so-called "self-dispersible" or "self-dispersing" pigments, i.e. pigments that are dispersible in the dispersion medium without dispersants.

The pigment is preferably used in a pigment dispersion used for preparing inkjet inks in an amount of 10 to 40 wt%, more preferably of 15 to 30 wt% based on the total weight of the pigment dispersion. In a coloured inkjet ink the pigment is preferably present in an amount of 0.1 to 20 wt%, preferably 1 to 13 wt% based on the total weight of the inkjet ink.

### Polymeric Dispersants

Typical polymeric dispersants are copolymers of two monomers but may contain three, four, five or even more monomers. The properties of polymeric dispersants depend on both the nature of the monomers and their distribution in the polymer. Copolymeric dispersants preferably have the following polymer compositions:
- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

Suitable polymeric dispersants are listed in the section on "Dispersants", more specifically [0064] to [0070] and [0074] to [0077], in EP 1911814 A (AGFA GRAPHICS).

The polymeric dispersant has preferably a number average molecular weight Mn between 500 and 30000, more preferably between 1500 and 10000.

The polymeric dispersant has preferably a weight average molecular weight Mw smaller than 100,000, more preferably smaller than 50,000 and most preferably smaller than 30,000.

The polymeric dispersant has preferably a polydispersity PD smaller than 2, more preferably smaller than 1.75 and most preferably smaller than 1.5.

Commercial examples of polymeric dispersants are the following:
- DISPERBYK™ dispersants available from BYK CHEMIE GMBH;
- SOLSPERSE™ dispersants available from LUBRIZOL;
- TEGO™ DISPERS™ dispersants from EVONIK;
- EDAPLAN™ dispersants from MÜNZING CHEMIE;
- ETHACRYL™ dispersants from LYONDELL;
- GANEX™ dispersants from ISP;
- DISPEX™ and EFKA™ dispersants from BASF;
- DISPONER™ dispersants from DEUCHEM.

Particularly preferred polymeric dispersants include Solsperse™ dispersants from LUBRIZOL, Efka™ dispersants from BASF and Disperbyk™ dispersants from BYK CHEMIE GMBH. Particularly preferred dispersants are Solsperse™ 32000, 35000 and 39000 dispersants from LUBRIZOL.

The polymeric dispersant is preferably used in an amount of 2 to 600 wt%, more preferably 5 to 200 wt%, most preferably 50 to 90 wt% based on the weight of the pigment.

### Dispersion Synergists

A dispersion synergist usually consists of an anionic part and a cationic part. The anionic part of the dispersion synergist exhibiting a certain molecular similarity with the colour pigment and the cationic part of the dispersion synergist consists of one or more protons and/or cations to compensate the charge of the anionic part of the dispersion synergist.

The dispersion synergist is preferably added in a smaller amount than the polymeric dispersant(s). The ratio of polymeric dispersant/dispersion synergist depends upon the pigment and should be determined experimentally. Typically the ratio wt% polymeric dispersant/wt% dispersion synergist is selected between 2:1 to 100:1, preferably between 2:1 and 20:1.

Suitable dispersion synergists that are commercially available include Solsperse™ 5000 and Solsperse™ 22000 from LUBRIZOL.

Particular preferred pigments for the magenta ink used are a diketopyrrolo-pyrrole pigment or a quinacridone pigment. Suitable dispersion synergists include those disclosed in EP 1790698 A (AGFA GRAPHICS), EP 1790696 A (AGFA GRAPHICS), WO 2007/060255 (AGFA GRAPHICS) and EP 1790695 A (AGFA GRAPHICS) .

In dispersing C.I. Pigment Blue 15:3, the use of a sulfonated Cu-phthalocyanine dispersion synergist, e.g. Solsperse™ 5000 from LUBRIZOL is preferred. Suitable dispersion synergists for yellow inkjet inks include those disclosed in EP 1790697 A (AGFA GRAPHICS).

### Polymerization Inhibitors

The radiation curable inkjet inks may contain a polymerization inhibitor. Suitable polymerization inhibitors include phenol type antioxidants, hindered amine light stabilizers, phosphor type antioxidants, hydroquinone monomethyl ether commonly used in (meth)acrylate monomers, and hydroquinone, t-butylcatechol, pyrogallol may also be used.

Suitable commercial inhibitors are, for example, Sumilizer™ GA-80, Sumilizer™ GM and Sumilizer™ GS produced by Sumitomo Chemical Co. Ltd.; Genorad™ 16, Genorad™ 18 and Genorad™ 20 from Rahn AG; Irgastab™ UV10 and Irgastab™ UV22, Tinuvin™ 460 and CGS20 from Ciba Specialty Chemicals; Floorstab™ UV range (UV-1, UV-2, UV-5 and UV-8) from Kromachem Ltd, Additol™ S range (S100, S110, S120 and S130) from Cytec Surface Specialties.

A preferred polymerization inhibitor is Irgastab™ UV10 from BASF.

In a preferred embodiment, the polymerization inhibitor is a mixture of different types of polymerization inhibitors. Preferred polymerization inhibitors are mixtures of an oxyl free radical-based polymerization inhibitor, a phenol-based polymerization inhibitor, and an amine-based polymerization inhibitor. Suitable examples are given in EP 2851402 A (FUJIFILM) .

Since excessive addition of these polymerization inhibitors will lower the ink sensitivity to curing, it is preferred that the amount capable of preventing polymerization is determined prior to blending. The amount of a polymerization inhibitor is preferably lower than 2 wt% based on the total weight of the radiation curable inkjet ink.

A preferred polymerization inhibitor is BHT for reasons of food safety.

Suitable polymerization inhibitors include phenol type antioxidants, hindered amine light stabilizers, phosphor type antioxidants, hydroquinonemonomethyl ether commonly used in (meth)acrylate monomers, and hydroquinone, t-butylcatechol, pyrogallol may also be used.

Suitable commercial inhibitors are, for example, Sumilizer™ GA-80, Sumilizer™ GM and Sumilizer™ GS produced by Sumitomo Chemical Co. Ltd.; Genorad™16, Genorad™ 18 and Genorad™ 20 from Rahn AG; Irgastab™ UV10 and Irgastab™ UV22, Tinuvin™ 460 and CGS20 from BASF; Floorstab™ UV range (UV-1, UV-2, UV-5 and UV-8) from Kromachem Ltd, Additol™ S range (S100, S110, S120 and S130) from Cytec Surface Specialties.

Since excessive addition of these polymerization inhibitors will lower the ink sensitivity to curing, the amount of a polymerization inhibitor is preferably less than 1 wt% of the radiation curable inkjet ink.

### Surfactants

The radiation curable inkjet inks may contain at least one surfactant. The surfactant can be anionic, cationic, non-ionic, or zwitter-ionic and is preferably added in a total quantity less than 3 wt% based on the total weight of the ink and particularly in a total less than 1wt% based on the total weight of the radiation curable inkjet ink.

Preferred surfactants are selected from fluoro surfactants (such as fluorinated hydrocarbons) and silicone surfactants. The silicone surfactants are preferably siloxanes and can be alkoxylated, polyester modified, polyether modified, polyether modified hydroxy functional, amine modified, epoxy modified and other modifications or combinations thereof. Preferred siloxanes are polymeric, for example polydimethylsiloxanes.

Preferred commercial silicone surfactants include BYK™ 333 and BYK™ UV3510 from BYK Chemie.

In a preferred embodiment, the surfactant is a polymerizable compound.

Preferred polymerizable silicone surfactants include a (meth)acrylated silicone surfactant. Most preferably the (meth)acrylated silicone surfactant is an acrylated silicone surfactant, because acrylates are more reactive than methacrylates.

In a preferred embodiment, the (meth)acrylated silicone surfactant is a polyether modified (meth)acrylated polydimethylsiloxane or a polyester modified (meth)acrylated polydimethylsiloxane.

Preferred commercially available (meth)acrylated silicone surfactants include: Ebecryl™ 350 , a silicone diacrylate from Cytec; the polyether modified acrylated polydimethylsiloxane BYK™ UV3500 and BYK™ UV3530, the polyester modified acrylated polydimethylsiloxane BYK™ UV3570, all manufactured by BYK Chemie; Tego™ Rad 2100, Tego™ Rad 2200N, Tego™ Rad 2250N, Tego™ Rad 2300, Tego™ Rad 2500, Tego™ Rad 2600, and Tego™ Rad 2700, Tego™ RC711 from EVONIK; Silaplane™ FM7711, Silaplane™ FM7721, Silaplane™ FM7731, Silaplane™ FM0711, Silaplane™ FM0721, Silaplane™ FM0725, Silaplane™ TM0701, Silaplane™ TM0701T all manufactured by CHISSO Corporation; and DMS-R05, DMS-R11, DMS-R18, DMS-R22, DMS-R31, DMS-U21, DBE-U22, SIB1400, RMS-044, RMS-033, RMS-083, UMS-182, UMS-992, UCS-052, RTT-1011 and UTT-1012 all manufactured by GELEST Inc..

### Preparation of Radiation Curable Inkjet Inks

The preparation of pigmented radiation curable inkjet inks is well-known to the skilled person. Preferred methods of preparation are disclosed in paragraphs [0076] to [0085] of WO 2011/069943 (AGFA).

### Inkjet Printing Devices

The radiation curable inkjet inks are jetted by one or more print heads ejecting small droplets in a controlled manner through nozzles onto a packaging substrate moving relative to the print head(s).

A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with inkjet ink or liquid. When the voltage is again removed, the ceramic expands to its original shape, ejecting a drop of ink from the print head.

A preferred piezoelectric print head is a so called push mode type piezoelectric print head, which has a rather large piezo-element capable of ejecting also high viscous inkjet ink droplets. Such a print head is available from RICOH as the GEN5s print head.

A preferred piezoelectric print head is a so-called through-flow piezoelectric drop-on-demand print head. Such a print head is available from TOSHIBA TEC as the CF1ou print head. Through-flow print heads are preferred because they enhance the reliability of food safe inkjet printing.

The inkjet print head normally scans back and forth in a transversal direction across the moving ink-receiver surface. Often the inkjet print head does not print on the way back. Bi-directional printing is preferred for obtaining a high areal throughput.

Another preferred printing method is by a "single pass printing process", which can be performed by using page wide inkjet print heads or multiple staggered inkjet print heads which cover the entire width of the ink-receiver surface. In a single pass printing process the inkjet print heads usually remain stationary and the ink-receiver surface is transported under the inkjet print heads.

In a particularly preferred embodiment, the inkjet printing of the UV curable inkjet inks is performed in a multi-pass printing mode. Multi-pass printing is a technique used to reduce banding in ink-jet printing. Dots of ink, when still in liquid form, tend to run together due to surface tension. This is referred to as coalescence. To print a high quality image it is important to print individual round dots. But to achieve full saturated colours, the dots must overlap to completely cover the substrate. By only printing a portion of the image data so as to avoid simultaneously printing adjacent dots during each printing cycle, coalescence may be largely avoided. Additionally, by avoiding all horizontal adjacencies, the transverse speed of the printing mechanism can be increased up to two times the rated print speed of the print head. In a preferred embodiment, the number of passes used is to 2 to 6 passes, more preferably no more than 4 passes.

An advantage of using a multi-pass printing mode is that the UV curable inkjet inks are cured in consecutive passes, rather than in a single pass which would require a curing device with a high UV output. The print head lifetime is also larger for multi pass printing. While in single pass printing one side shooter is sufficient to replace the whole print head, in multi pass printing side shooters and even failings can be tolerated. Also the cost of a multi-pass printer is usually much lower, especially for wide format substrates.

### Curing Devices

The radiation curable inkjet inks are preferably cured by ultraviolet radiation.

In inkjet printing, the UV curing device may be arranged in combination with the print head of the inkjet printer, travelling therewith so that the UV curable inkjet ink is exposed to curing radiation very shortly after been jetted.

In such an arrangement it can be difficult to provide a small enough UV radiation source connected to and travelling with the print head. Therefore, a static fixed radiation source may be employed, e.g. a source of curing UV-light, connected to the radiation source by means of flexible radiation conductive means such as a fibre optic bundle or an internally reflective flexible tube.

Alternatively, the actinic radiation may be supplied from a fixed source to the radiation head by an arrangement of mirrors including a mirror upon the radiation head.

The source of radiation arranged not to move with the print head, may also be an elongated radiation source extending transversely across the ink-receiver surface to be cured and adjacent the transverse path of the print head so that the subsequent rows of images formed by the print head are passed, stepwise or continually, beneath that radiation source.

Any ultraviolet light source, as long as part of the emitted light can be absorbed by the photo-initiator or photo-initiator system, may be employed as a radiation source, such as, a high or low pressure mercury lamp, a cold cathode tube, a black light, an ultraviolet LED, an ultraviolet laser, and a flash light. Of these, the preferred source is one exhibiting a relatively long wavelength UV-contribution having a dominant wavelength of 300-400 nm. Specifically, a UV-A light source is preferred due to the reduced light scattering therewith resulting in more efficient interior curing.

UV radiation is generally classed as UV-A, UV-B, and UV-C as follows:
- UV-A: 400 nm to 320 nm
- UV-B: 320 nm to 290 nm
- UV-C: 290 nm to 100 nm.

Furthermore, it is possible to cure the image using, consecutively or simultaneously, two light sources of differing wavelength or illuminance. For example, the first UV-source can be selected to be rich in UV-C, in particular in the range of 260 nm-200 nm. The second UV-source can then be rich in UV-A, e.g. a gallium-doped lamp, or a different lamp high in both UV-A and UV-B. The use of two UV-sources has been found to have advantages e.g. a fast curing speed and a high curing degree.

In a particularly preferred embodiment, the UV curing is performed using UV LEDs having an emission wavelength higher than 370 nm.

For facilitating curing, the inkjet printer often includes one or more oxygen depletion units. The oxygen depletion units place a blanket of nitrogen or other relatively inert gas (e.g. CO₂), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

### EXAMPLES

### Materials

All compounds and solvents were readily available from fine chemical suppliers such as ACROS or ALDRICH unless otherwise specified. The water used was demineralized water.
**VEEA** is 2-(2'-vinyloxyethoxy)ethyl acrylate available from Nippon Shokubai, Japan.
**INHIB** is a mixture forming a polymerization inhibitor having a composition according to Table 1.

**Table 1**

| **Component** | **wt%** |
|---|---|
| VEEA | 82.4 |
| p-methoxyphenol | 4.0 |
| 2,6-di-tert-butyl-4-methylphenol | 10.0 |
| Cupferron™ AL | 3.6 |

**Cupferron™ AL** is aluminum N-nitrosophenylhydroxylamine from WAKO CHEMICALS LTD.
**DB162** is an abbreviation used for the polymeric dispersant Disperbyk™ 162 available from BYK CHEMIE GMBH whereof the solvent mixture of 2-methoxy-1-methylethylacetate, xylene and n-butylacetate was removed. The polymeric dispersant is a polyester-polyurethane dispersant on the basis of caprolactam and toluene diisocyanate having an amine value of 13 mg KOH/g, a Mn of about 4,425 and a Mw of about 6,270.
**PB15:4** is an abbreviation used for a C.I. Pigment Blue 15:4 pigment, available as Sun Fast™ Blue 15:4 from SUN CHEMICAL.
**PY150** is a C.I. Pigment Yellow 150 pigment available as Cromophtal™ Yellow D 1085 from BASF.
**PV19** is a C.I. Pigment Violet 19 pigment available as Quindo™ Red 19 from SUN CHEMICAL.
**PR57:1** is a C.I. Pigment Red 57:1 pigment available as Symuler™ Brilliant Carmine 6B350K from SUN CHEMICAL.
**PB7** is a carbon black pigment available as Special Black™ 550 from EVONIK.
**IC819** is an abbreviation for Irgacure™ 819, a photo-initiator available from BASF.
**EHA** is 2-ethylhexyl 4-dimethylaminobenzoate available as Genocure™ EHA from RAHN.
**Irgastab™ UV 10** is 4-hydroxy-2,2,6,6-tetramethylpiperidinooxy sebacate available from BASF.
**BYK™ UV3510** is a polyethermodified polydimethylsiloxane wetting agent available from BYK CHEMIE GMBH.
**BHT** is 2,6-di-tert-butyl-4-methylphenol.
**INI-1** is a polymerizable thioxanthone according to Formula (AX-1):

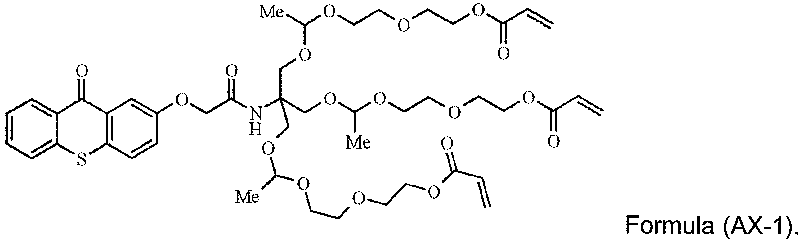

This photoinitiator was synthesized as follows:

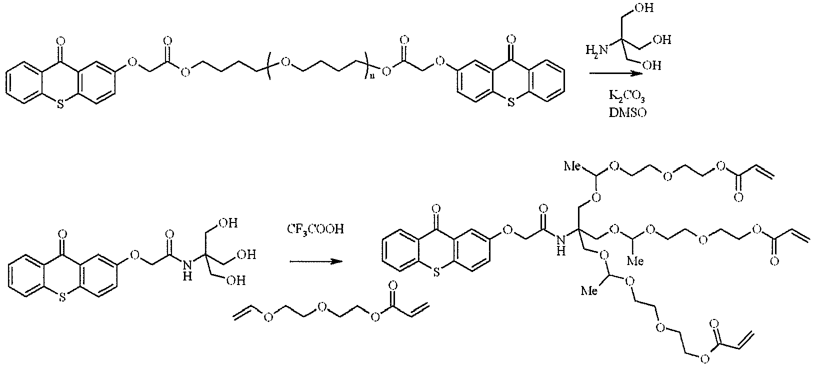

### Addendum on page 41

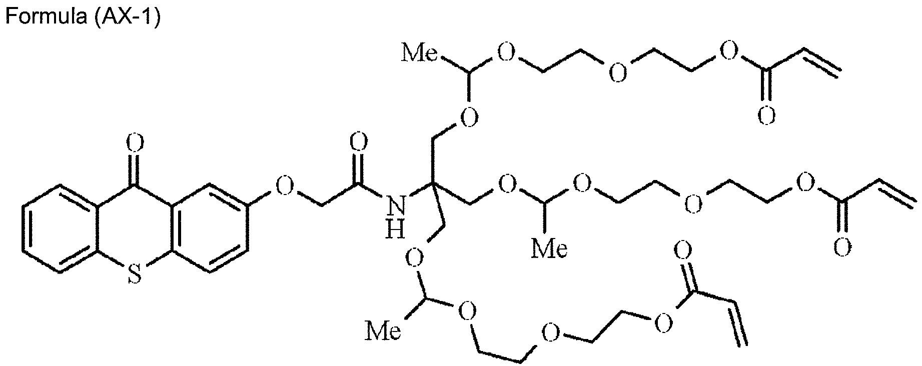

See next page for Synthesis scheme

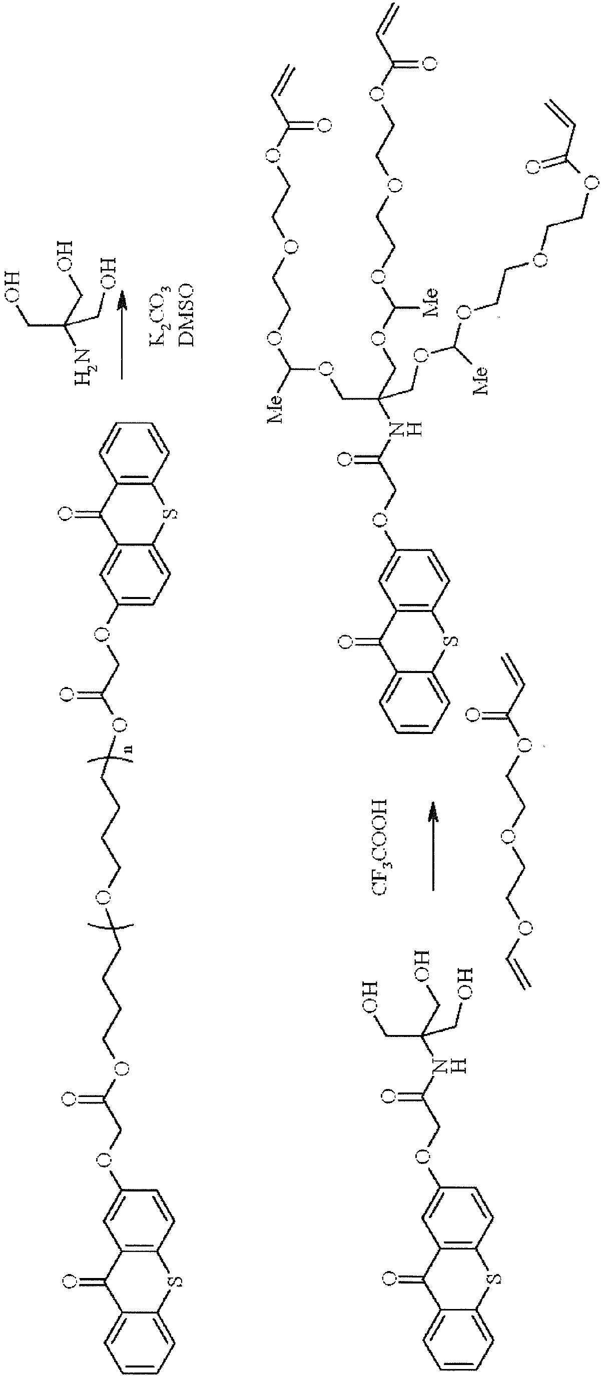

### Step 1 : the aminolysis of Omnipol™ TX

395 g Omnipol™ TX, supplied by IGM, was dissolved in 1850 ml dimethyl sulfoxide. The reaction mixture was heated to 60°C and 363 g (3 mol) tris(hydroxymethyl)aminomethane and 415 g (3 mol) potassium carbonate were added. The reaction was allowed to continue for 2 hours at 60°C. The reaction mixture was allowed to cool down to room temperature. The precipitated salts were removed by filtration and the reaction mixture was added to a mixture of 1500 ml water and 250 ml acetone. The intermediate thioxanthone precipitated from the medium, was isolated by filtration and dried. The crude thioxanthone was treated with 1500 ml acetone, isolated by filtration and dried. 260 g of the thioxanthone was isolated (TLC-analysis : RP-C18 (Partisil™ KC18F, supplied by Whatman), eluent MeOH / 0.5 M NaCl, R_{f} = 0.55). TLC analysis showed the presence of a small amount of an isomeric structure (R_{f} = 0.60). The following structure was assigned to the isomer:

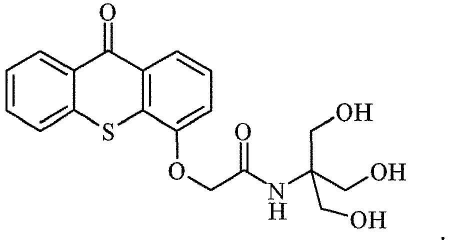

The intermediate was further used as a mixture of the main isomer and the minor isomer.

### Step 2 : the addition to VEEA:

22 g (58 mmol) of the amido-trihydroxy-thioxanthone was added to 227.8 g (1.224 mol) VEEA. 0.13 g (86 µl, 1.16 mmol) trifluoroacetic acid and 0.25 g (1.16 mmol) BHT were added and the mixture was heated to 77°C. The reaction was allowed to continue at 77°C for 16 hours. The reaction was allowed to cool down to room temperature and 20 g of activated Lewatit M600 MB was added. The mixture was stirred for four hours at room temperature. The ion exchanger was removed by filtration. AX-1 was used as a solution in VEEA. (TLC-analysis : RP-C18 (Partisil™ KC18F, supplied by Whatman), eluent: MeOH/0.5 M NaCl 80/20, R_{f}= 0.18). Based on ¹H-NMR analysis, the solution contained 19 wt% AX-1.

Esacure™ KIP160 is a difunctional α-hydroxyketone available from LAMBERTI and having the chemical structure:

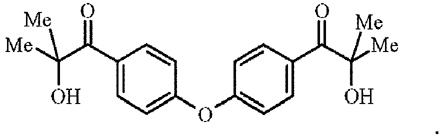

INI-2 is a polymerizable Norrish type I initiator having the chemical structure : 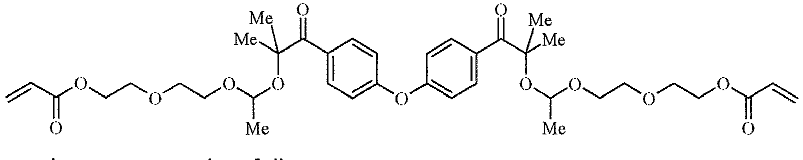 and was prepared as follows : 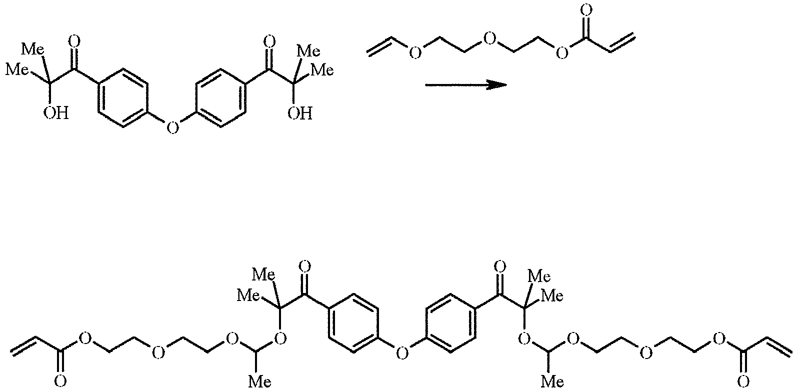 A mixture of 119.75 g (0.350 mol) Esacure™ KIP160, 380.10 g VEEA and 1.54 g BHT was heated to 85°C. 9.99 g of poly(vinylpryridinium) tosylate was added and the reaction was allowed to continue for 10 hours at 85°C. The reaction mixture was allowed to cool down to room temperature and the catalyst was removed by filtration. The solution was used as such in the radiation curable inkjet inks. The concentration was determined by ¹H-NMR analysis of the solution. The initiator concentration was 51.6% by weight.

**Siliconised paper SP** is a 54 µm thick siliconised glassine paper substrate available Ritrama™ Gloss 80 RP1001 YG60 from RITRAMA S.p.A.

**BOPP film** is a 35 µm thick biaxially oriented polypropylene film available as Oppalyte™ 35MW647 from JINDAL FILMS.

**PET Seal film** is a polyethylene terephthalate film available as BaCo™ Seal Film PET-W ME5.7 from BALLERSTAEDT.

**Alu Seal Film** is foil containing an Al-compound and available as BaCo™ Seal Glass ST 4.4 from BALLERSTAEDT.

### Measurement methods

### 1. Surface Tension

The static surface tension of the radiation curable inks was measured with a KRÜSS tensiometer K9 from KRÜSS GmbH, Germany at 25°C after 60 seconds.

### 2. Viscosity

The viscosity was measured at 40°C using a Haake™ Rotovisco at a shear rate of 1,000 s⁻¹.

### 3. Average Particle Size

The average particle size of pigment particles in inkjet ink was determined by photon correlation spectroscopy at a wavelength of 633 nm with a 4mW HeNe laser on a diluted sample of the inkjet ink. The particle size analyzer used was a Malvern™ nano-S available from Goffin-Meyvis.

The sample was prepared by addition of one drop of ink to a cuvette containing 1.5 mL ethyl acetate and mixed until a homogenous sample was obtained. The measured particle size is the average value of 3 consecutive measurements consisting of 6 runs of 20 seconds. For good inkjet characteristics (jetting characteristics and print quality) the average particle size of the dispersed particles is less than 200 nm, preferably between 75 and 175 nm.

### EXAMPLE 1

This example illustrates the influence of the printing speed on the amount of extractables from a cured image printed with cyan, yellow and black radiation curable inkjet inks.

### Preparation of Pigment Dispersions

For the preparation of each inkjet ink, first a pigment dispersion was prepared.

A cyan pigment dispersion was prepared by mixing PB15:4, a 30 % solution of DB162 in VEEA and the stabilizer INHIB for 30 minutes in VEEA in order to obtain a composition according to Table 2 using a DISPERLUX™ Dissolver (from DISPERLUX S.A.R.L., Luxembourg) and subsequently milling this mixture in a DYNOMILL ECM POLY mill (from BACHOFEN GmbH) having a bead filling of 42% with 0.4 mm yttrium stabilized zirconium oxide beads ("high wear resistant zirconia grinding media" from TOSOH Co.) for 120 minutes at a rotation speed of 10.4 m/s. After milling the dispersion was separated from the beads using a filter cloth.

**Table 2**

| **Component** | **wt%** |
|---|---|
| **PB15:4** | 15 |
| **DB162** | 15 |
| **INHIB** | 1 |
| **VEEA** | 69 |

### Preparation of Radiation Curable Inkjet Inks

The pigment dispersions were all prepared in similar manner as here above exemplified for the cyan pigment dispersion used in the cyan inkjet ink INK-C. The pigment dispersions were mixed with other components to obtain an ink composition as shown in Table 3 for the cyan inkjet ink INK-C, the magenta inkjet ink INK-M, the yellow inkjet ink INK-Y and the black inkjet ink INK-K.

**Table 3**

| **wt% of ink component** | **INK-C** | **INK-M** | **INK-Y** | **INK-K** |
|---|---|---|---|---|
| PB15:4 | 2.40 | --- | --- | 0.56 |
| PV19 | --- | 2.30 | --- | 0.40 |
| PR57:1 | --- | 0.46 | --- | --- |
| PY150 | --- | --- | 2.70 | --- |
| PV19 | --- | --- | --- | 0.40 |
| PB7 | --- | --- | --- | 1.57 |
| DB162 | 2.40 | 2.76 | 2.70 | 2.53 |
| INHIB | 0.16 | 0.18 | 0.18 | 0.17 |
| VEEA | 69.10 | 68.38 | 68.48 | 68.83 |
| BHT | 1.00 | 1.00 | 1.00 | --- |
| Irgastab™ UV10 | --- | --- | --- | 1.00 |
| IC819 | 2.50 | 2.50 | 2.50 | 2.50 |
| INI-1 | 10.64 | 10.64 | 10.64 | 10.64 |
| INI-2 | 9.80 | 9.80 | 9.80 | 9.80 |
| EHA | 1.00 | 1.00 | 1.00 | 1.00 |
| Byk™ UV 3510 | 1.00 | 1.00 | 1.00 | 1.00 |

The inkjet inks were characterized for surface tension, viscosity and average particles size. The results are shown in Table 4.

**Table 4**

| **Parameter** | **INK-C** | **INK-M** | **INK-Y** | **INK-K** |
|---|---|---|---|---|
| Surface Tension (mN/M) | 22 | 22 | 22 | 22 |
| Viscosity (mPa.s) | 5.6 | 5.9 | 5.9 | 5.8 |
| Average particle size (nm) | 113 | 160 | 168 | 119 |

### Evaluation and Results

Images of 5 cm x 5 cm squares (100% ink coverage) were inkjet printed at a resolution of 600 x 600 dpi on a 100 µm PET foil for each of the radiation curable inkjet inks INK-C, INK-Y and INK-K with a CSAT ITS6 inkjet printer equipped with piezoelectric print heads and cured with UV LEDs. The printing speed was varied from 10 to 40 m/min.

At same printing speeds, similar images of 5 cm x 5 cm squares having an ink coverage composed of 80% ink coverage by the cyan ink INK-C, 80% ink coverage by the yellow ink INK-Y and 30% ink coverage by the black inkjet ink INK-K.

The migrateables were evaluated as follows. Two circular samples having a diameter of 3 cm (7.068 cm²) was punched out of two UV cured 5 cm x 5 cm square. The circular samples were put into a 60 ml beaker and extracted with 5 ml acetonitrile, using ultrasound for 30 minutes. The extract was transferred into a 5 ml volumetric flask. The sample were rinsed twice with a small amount of acetonitrile and the rinsing solvent was transferred into the 5 ml volumetric flask until the volume was adjusted to 5 ml. The solution was thoroughly mixed and filtered over a 0.2 µm filter. 15 µl of each sample was injected on the HPLC.

The chromatographic method used an Alltime™ C18.5 µm column (150 x 3.2 mm), supplied by Alltech, was used. A flow rate of 0.5 ml/min was used at a temperature of 40°C. The concentration of the different thioxanthones was determined relative to standard solutions at 312 nm.

The gradient with water as Eluent A and acetonitrile as Eluent B used for the determination of the thioxanthones is given in Table 5.

**Table 5**

| **Time** | **% eluent A** | **% eluent B** |
|---|---|---|
| 0 | 55 | 45 |
| 6 | 55 | 45 |
| 11 | 0 | 100 |
| 30 | 0 | 100 |
| 31 | 55 | 45 |
| 38 | 55 | 45 |

The results are summarized in Table 6. The results are expressed as food ppb and calculated as follows. The amount of VEEA extractable from 14.136 cm² of each sample is calculated from the analysis and expressed in µg. This is recalculated to 6 dm², which corresponds to the surface area of a box containing one liter of a simulant. The recalculated amount of VEEA expressed in µg corresponds to the amount that would have been extracted from the total surface area of the box in contact with one liter of the simulant. If the simulant would have a density of one, the extracted amount would correspond to the total amount of VEEA expressed as µg in one kilogram of simulant or ppb.

**Table 6**

| **Print Speed** | **Food ppb of VEEA determined on extracted samples of:** | | | |
|---|---|---|---|---|
| | 100% INK-K | 100% INK-C | 100% INK-Y | 80% INK-C/80% INK-Y/30%INK-K |
| 10 m/min | 899 | 80 | 296 | 650 |
| 20 m/min | 2367 | 662 | 570 | 2414 |
| 30 m/min | 3206 | 1427 | 1075 | 3472 |
| 40 m/min | 4335 | 2490 | 1741 | 4345 |

In Table 6, it can be seen that although the radiation curable inkjet inks have approximately the same ink composition containing about the same of VEEA, that different amounts of extractables are noted. One of the reasons is that the colour pigments take away part of the UV light intended for the photoinitiators in a different proportion. It can also been seen that higher printing speeds result in higher amounts of extractable VEEA. By printing test patterns where the different radiation curable inkjet inks are printed in different amounts alone and in combination with one or more of the other inkjet inks and by determining the extractable amount of VEEA and/or other ink components for these print samples, a set of extractable data on these inkjet inks can be stored in a print validation server for a 100 µm PET packaging substrate printed at different printing speeds and UV LED cured by a specified UV dose on an inkjet printer of the type CSAT ITS6. This data can then be used if a packaging definition is defined on this inkjet printer to determine if a food safe packaging (i.e. meeting the specific migration limits of the ink component) can be printed based on the image intent part of the packaging definition and according to the selected characteristics for manufacturing intent part of the packaging definition. For GMP reasons, a safety limit of e.g. 75% of the specific migration limit of the ink component is taken instead of the specific migration limit itself.

### EXAMPLE 2

This example illustrates the influence of the packaging substrate on the amount of extractables from a cured image of radiation curable inkjet inks.

### Preparation of Inkjet Printed Samples

A checker board type of pattern according to Table 7 was printed on each of the packaging substrates, wherein 1 represents a dark grey patch, 2 represents a light grey patch and 3 represents a green patch. The patches were printed, using the inkjet inks of Example 1 using the screen percentages given in Table 8.

**Table 7**

| | | | | | |
|---|---|---|---|---|---|
| 1 | 2 | 3 | 1 | 2 | 3 |
| 3 | 1 | 2 | 3 | 1 | 2 |
| 2 | 3 | 1 | 2 | 3 | 1 |

**Table 8**

| **Patch** | **Colour** | **Screen percentages of** | | | |
|---|---|---|---|---|---|
| | | **INK-C** | **INK-M** | **INK-Y** | **INK-K** |
| **1** | **Dark grey** | - | - | - | 100 |
| **2** | **Light grey** | 60 | 60 | 60 | 20 |
| **3** | **Green** | 100 | - | 100 | 60 |

The patches were printed using Kyocera™ KJ4A print heads at a printing speed of 50 m/min in grey scale mode using a maximum dropsize of 11 pL at 600x600 dpi at 20 kHz and a jetting voltage of 26.5 V. The printing order was KCMY and optionally LED pinning at 395 nm was performed after printing K, C and M using a water cooled LED with an output wavelength of 395 nm from Integration Technologies used at 0.75W/cm². The printed image was immediately off line further cured on a Fusion DRSE-120 conveyer using first a D bulb followed by a V bulb at maximum power and a belt speed of 40 m/min.

### Evaluation and Results

Two circles with a diameter of 15 cm were cut from each printed sample and the migration was determined.

Extraction cells conform EN 1186-1 (cell type B) were used in the migration experiments. Two circles with a diameter of 15 cm were cut from a printed sample. The two circles are mounted in the extraction cells with the non printed side in contact with the extraction solvent. The cells were closed and the cells were filled with iso-octane as food simulant. The cells were stored at room temperature for two days (conditions compliant with EC 10/2011, 2002/72/EC, 97/48/EC and 85/572/EEC for testing fatty foods for prolonged storage at room temperature). The extract was filtered over a 0.2 µm filter and analyzed with HPLC for quantification of VEEA.

The chromatographic method used an Altima™ C18 5µm column (150 x 3.2 mm) supplied by Alltech. A flow rate of 0.5 ml/min was used at a temperature of 40°C. UV-VIS detection at 204 nm was used. The HPLC method used for all samples had an applied gradient with an end run = 38 min as given in Table 9 wherein eluent A was water and eluent B was acetonitrile.

**Table 9**

| **Time (min)** | **% eluent A** | **% eluent B** |
|---|---|---|
| 0 | 55 | 45 |
| 6 | 55 | 45 |
| 11 | 0 | 100 (linear gradient) |
| 30 | 0 | 100 |
| 31 | 55 | 45 |
| 38 | 55 | 45 |

15 µl of the extract was injected and the VEEA concentration was determined in comparison with a reference sample (5 µl injected from of a solution of 1mg in 50 ml of CH3CN and dilutions thereof). The migrated amount of VEEA is expressed as food ppb. The amount, migrated from the total surface area of each sample in contact with iso-octane, expressed in µg, was recalculated to 6 dm², which corresponds to the surface area of a box containing one liter of a simulant. The recalculated amount of VEEA, expressed in µg corresponds to the amount that would have been migrated through the total surface area of the box in contact with one liter of the simulant. If the simulant would have a density of one, the extracted amount would correspond to the total amount of VEEA expressed as µg in one kilogram of simulant or ppb. The results are shown in Table 10, n.d. means not detectable.

**Table 10**

| **Packaging substrate** | **Pin Curing** | **UV dose in mJ/cm²** | **Food ppb VEEA** |
|---|---|---|---|
| PET Seal film | No | 801 | 9 |
| PET Seal film | No | 1159 | n.d. |
| PET Seal film | Yes | 1202 | n.d. |
| Alu Seal Film | No | 1159 | 15 |
| Alu Seal Film | Yes | 1202 | 8 |
| Siliconised paper SP | No | 1159 | 59 |
| Siliconised paper SP | Yes | 1202 | 39 |
| BOPP film | Yes | 1202 | 161 |

From Table 10, it should be clear that some of the packaging substrates are capable of reaching a migration limit of 10 ppb under the specific printing while others are not. This data can again be used if a packaging definition is defined on this inkjet printer to determine if a food safe packaging (i.e. meeting the specific migration limits of the ink component) can be obtained by inkjet printing on a specific packaging substrate based on the image intent part of the packaging definition and according to the selected characteristics for manufacturing intent part of the packaging definition.

## Claims

1. A method of manufacturing a packaging for food, cosmetics or pharma comprising the steps of:
- storing on a print validation server a packaging definition comprising an image intent part and a manufacturing intent part including characteristics of a packaging substrate, an inkjet printer and a plurality of inkjet inks including one or more SML-ink components and/or at least 20 wt% based on the total weight of inkjet ink of a vinyl ether acrylate according to Formula (I): 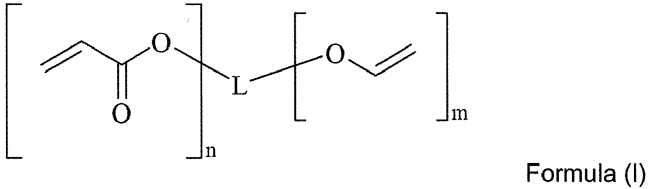 wherein,
L represents a linking group comprising two to ten carbon atoms; and
n and m independently represent a value from 1 to 5;
- rendering the image intent part according to characteristics of the manufacturing intent part to obtain a set of colour separations;
- forming a set of meta-data including a safety limit of the one or more extractable SML-ink components and/or the extractable vinyl ether acrylate determined from the inkjet ink coverage required for each colour separation;
- transmitting one or more files containing the set of colour separations and the set of meta-data to an inkjet print server; and
- inkjet printing the set of colour separations on the packaging substrate in the inkjet printer according to the set of meta-data;
wherein the SML-ink component is a compound of Section A or B in the Swiss legislation SR 817.023.21 of 23 November 2011 (Status on 1 April 2013).

2. The manufacturing method according to claim 1, further including the step of comparing the safety limit with the amount of extractables determined on the inkjet printed packaging substrate.

3. The manufacturing method according to claim 1 or 2, wherein the vinyl ether acrylate according to Formula (I) is 2-(2'-vinyloxyethoxy) ethyl acrylate.

4. The manufacturing method according to any one of claims 1 to 3, wherein the plurality of inkjet inks contain at least one photoinitiator selected from the group consisting of an acylphosphine oxide photoinitiator and a polymerizable and polymeric thioxanthone photoinitiator.

5. The manufacturing method according to claim 4, wherein the polymerizable thioxanthone photoinitiator is represented by Formula (II):

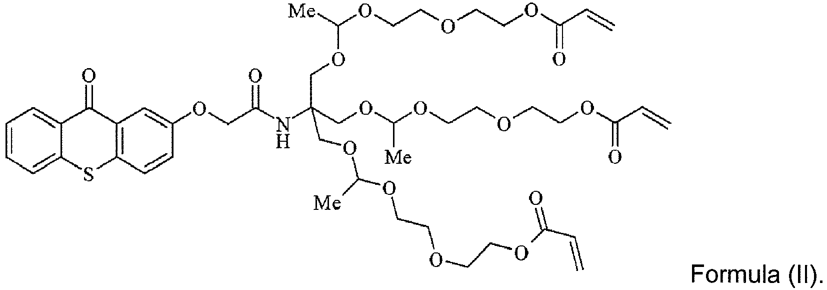

6. The manufacturing method according to any of claims 1 to 5, wherein the safety limit is included in the set of meta-data as a reference code.

7. The manufacturing method according to claim 6, wherein the reference code is part of the image after the inkjet printing step.

8. The manufacturing method according to claim 7, wherein the reference code is present in a 2D code in the image.

9. The manufacturing method according to claim 7 or 8, wherein the reference code is used to retrieve the safety limit from the print validation server.

10. The manufacturing method according to any of claims 1 to 9, wherein the transmitting of one or more files containing the set of colour separations and the set of meta-data to an inkjet print server comprises the following steps:
- bundling the set of colour separations and the set of meta-data into a container file;
- transmitting the container file to an inkjet print server; and
- unbundling the container file on the inkjet print server into the set of coloration separations and the set of meta-data.

11. The manufacturing method according to any of claims 1 to 10, wherein the packaging definition comprising the image intent part and the manufacturing intent part stored on the print validation server is entered by a packaging designer.

12. The manufacturing method according to any of claims 1 to 12, wherein a tracking code for track-and-trace is included in the meta-data and/or at least one of the colour separation files.

13. The manufacturing method according to claim 13, wherein the tracking code for track-and-trace is included in a 2D code present in the image.

14. An inkjet printed packaging for food, cosmetics or pharma containing an image including a 2D code including a reference code for retrieving a safety limit of the SML-ink component and/or the at least an extractable vinyl ether acrylate according to Formula (I): 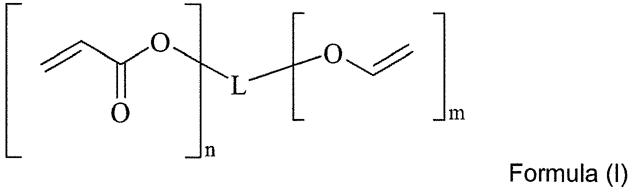 wherein,
L represents a linking group comprising two to ten carbon atoms; and
n and m independently represent a value from 1 to 5; and
wherein the SML-ink component is a compound of Section A or B in the Swiss legislation SR 817.023.21 of 23 November 2011 (Status on 1 April 2013).

15. Use of a software program for providing a reference code in order to retrieve a safety limit of a SML-ink component and/or an extractable vinyl ether acrylate according to Formula (I): 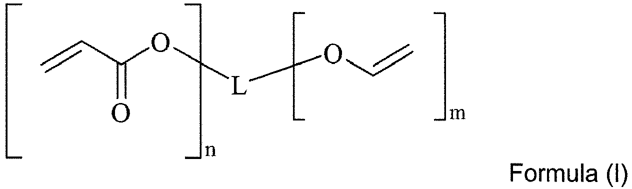 wherein,
L represents a linking group comprising two to ten carbon atoms; and
n and m independently represent a value from 1 to 5;
on an inkjet printed packaging for food, cosmetics or pharma containing in the image a 2D code including a tracking code for track-and-trace wherein the SML-ink component is a compound of Section A or B in the Swiss legislation SR 817.023.21 of 23 November 2011 (Status on 1 April 2013).

## Patentansprüche

1. Ein Verfahren zur Herstellung einer Verpackung für Lebensmittel, Kosmetika oder Pharmazeutika, umfassend die folgenden Schritte:
- Speichern auf einem Druckvalidierungsserver einer Verpackungsdefinition, umfassend einen Bildinhaltsteil und einen Herstellungsinhaltsteil, umfassend Kennzeichen eines Verpackungssubstrats, einen Tintenstrahldrucker und eine Vielzahl von Tintenstrahltinten, umfassend eine oder mehrere SML-Tintenkomponenten und/oder mindestens 20 Gew.-%, bezogen auf das Gesamtgewicht der Tintenstrahltinte, eines Vinyletheracrylats gemäß Formel (I): 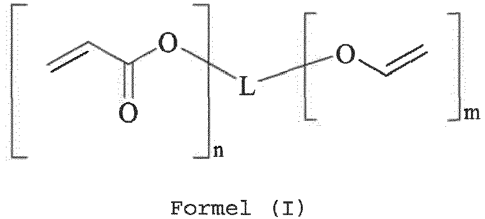 in der
L eine zwei bis zehn Kohlenstoffatome umfassende Verbindungsgruppe bedeutet, und
n und m unabhängig voneinander einen Wert von 1 bis 5 bedeuten,
- Rendern des Bildinhaltsteils gemäß den Kennzeichen des Herstellungsinhaltsteils zum Erhalt eines Satzes von Farbauszügen,
- Bilden eines Satzes von Metadaten, umfassend eine Sicherheitsgrenze der einen oder mehreren extrahierbaren SML-Tintenkomponenten und/oder des extrahierbaren Vinyletheracrylats, bestimmt auf Basis der für jeden Farbauszug benötigten Tintenstrahltintendeckung,
- Übertragen einer oder mehrerer Dateien, die den Satz von Farbauszügen und den Satz von Metadaten enthalten, zu einem Tintenstrahldruckserver, und
- Tintenstrahldruck des Satzes von Farbauszügen auf dem Verpackungssubstrat im Tintenstrahldrucker gemäß dem Satz von Metadaten,
wobei die SML-Tintenkomponente eine Verbindung von Absatz A oder B in der Schweizer Verordnung SR 817.023.21 vom 23. November 2011 (Stand am 1. April 2013) ist.

2. Herstellungsverfahren nach Anspruch 1, ferner umfassend den Schritt, in dem die Sicherheitsgrenze mit der auf dem durch Tintenstrahldruck bedruckten Verpackungssubstrat bestimmten Menge extrahierbarer Stoffe verglichen wird.

3. Herstellungsverfahren nach Anspruch 1 oder 2, wobei das Vinyletheracrylat gemäß Formel (I) 2-(2'-Vinyloxyethoxy)-ethylacrylat ist.

4. Herstellungsverfahren nach einem der Ansprüche 1 bis 3, wobei die Vielzahl von Tintenstrahltinten mindestens einen Fotoinitiator, ausgewählt aus der Gruppe bestehend aus einem Acylphosphinoxidfotoinitiator und einem polymerisierbaren und polymeren Thioxanthonfotoinitiator, enthält.

5. Herstellungsverfahren nach Anspruch 4, wobei der polymerisierbare Thioxanthonfotoinitiator Formel (II) entspricht:

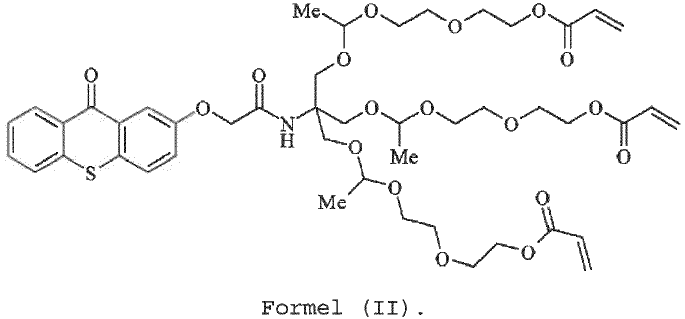

6. Herstellungsverfahren nach einem der Ansprüche 1 bis 5, wobei die Sicherheitsgrenze als Referenzcode im Satz von Metadaten enthalten ist.

7. Herstellungsverfahren nach Anspruch 6, wobei die Referenzcode Teil des Bildes nach dem Tintenstrahldruckschritt ist.

8. Herstellungsverfahren nach Anspruch 7, wobei die Referenzcode in einer 2D-Code im Bild enthalten ist.

9. Herstellungsverfahren nach Anspruch 7 oder 8, wobei die Referenzcode zum Abrufen der Sicherheitsgrenze aus dem Druckvalidierungsserver verwendet wird.

10. Herstellungsverfahren nach einem der Ansprüche 1 bis 9, wobei die Übertragung einer oder mehrerer Dateien, die den Satz von Farbauszügen und den Satz von Metadaten enthalten, zu einem Tintenstrahldruckserver die folgenden Schritte umfasst:
- Bündeln des Satzes von Farbauszügen und des Satzes von Metadaten in eine Containerdatei,
- Übertragen der Containerdatei zu einem Tintenstrahldruckserver, und
- Entbündeln der Containerdatei auf dem Tintenstrahldruckserver in den Satz von Farbauszügen und den Satz von Metadaten.

11. Herstellungsverfahren nach einem der Ansprüche 1 bis 10, wobei die den auf dem Druckvalidierungsserver gespeicherten Bildinhaltsteil und Herstellungsinhaltsteil umfassende Verpackungsdefinition durch einen Verpackungsdesigner eingegeben wird.

12. Herstellungsverfahren nach einem der Ansprüche 1 bis 12, wobei eine Verfolgungscode für Track-and-Trace in den Metadaten und/oder mindestens einer der Farbauszugsdateien enthalten ist.

13. Herstellungsverfahren nach Anspruch 13, wobei die Verfolgungscode für Track-and-Trace in einer 2D-Code im Bild enthalten ist.

14. Eine durch Tintenstrahldruck bedruckte Verpackung für Lebensmittel, Kosmetika oder Pharmazeutika, umfassend ein Bild, enthaltend eine 2D-Code, umfassend eine Referenzcode zum Abrufen einer Sicherheitsgrenze der SML-Tintenkomponente und/oder des mindestens einen extrahierbaren Vinyletheracrylats gemäß Formel (I) : 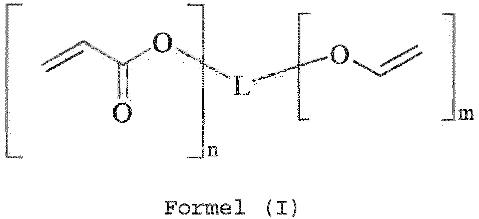 in der
L eine zwei bis zehn Kohlenstoffatom umfassende Verbindungsgruppe bedeutet, und
n und m unabhängig voneinander einen Wert von 1 bis 5 bedeuten,
und wobei die SML-Tintenkomponente eine Verbindung von Absatz A oder B in der Schweizer Verordnung SR 817.023.21 vom 23. November 2011 (Stand am 1. April 2013) ist.

15. Verwendung eines Softwareprogramms zum Erstellen einer Referenzcode zum Abrufen einer Sicherheitsgrenze einer SML-Tintenkomponente und/oder eines extrahierbaren Vinyletheracrylats gemäß Formel (I): 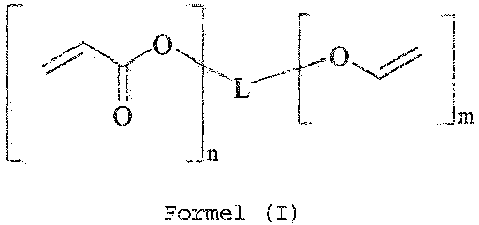 in der
L eine zwei bis zehn Kohlenstoffatom umfassende Verbindungsgruppe bedeutet, und
n und m unabhängig voneinander einen Wert von 1 bis 5 bedeuten,
auf einer durch Tintenstrahldruck bedruckten Verpackung für Lebensmittel, Kosmetika oder Pharmazeutika, die im Bild eine 2D-Code umfasst, enthaltend eine Verfolgungscode für Track-and-Trace, wobei die SML-Tintenkomponente eine Verbindung von Absatz A oder B in der Schweizer Verordnung SR 817.023.21 vom 23. November 2011 (Stand am 1. April 2013) ist.

## Revendications

1. Procédé pour la fabrication d'un emballage pour produits alimentaires, cosmétiques et pharmaceutiques, comprenant les étapes consistant à:
- mémoriser sur un serveur de validation d'impression une définition d'emballage comprenant une partie de contenu d'image et une partie de contenu de fabrication, comprenant des caractéristiques d'un substrat d'emballage, une imprimante à jet d'encre et une multitude d'encres pour impression à jet d'encre comprenant un ou plusieurs composants d'encre SML et/ou au moins 20% en poids d'un acrylate d'éther vinylique selon la Formule (I) par rapport au poids total de l'encre pour impression à jet d'encre : 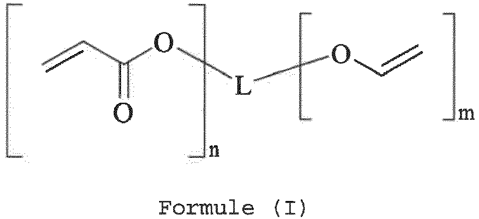 où
L représente un groupe de liaison comprenant deux à dix atomes de carbone, et
n et m représentent, indépendamment l'un de l'autre, une valeur de 1 à 5,
- rendériser la partie de contenu d'image conformément aux caractéristiques de la partie de contenu de fabrication afin d'obtenir un ensemble de sélections de couleurs,
- former un ensemble de métadonnées comprenant une limite de sécurité desdits un ou plusieurs composants d'encre SML extractibles et/ou de l'acrylate d'éther vinylique extractible, déterminée à partir de la couverture d'encre pour impression à jet d'encre requise pour chaque sélection de couleur,
- transférer un ou plusieurs fichiers comprenant l'ensemble de sélections de couleurs et l'ensemble de métadonnées vers un serveur d'impression à jet d'encre, et
- imprimer à jet d'encre l'ensemble de sélections de couleurs sur le substrat d'emballage dans l'imprimante à jet d'encre conformément à l'ensemble de métadonnées,
**caractérisé en ce que** le composant d'encre SML est un composé de la section A ou B dans l'ordonnance suisse SR 817.023.21 du 23 novembre 2011 (état du 1 avril 2013).

2. Procédé de fabrication selon la revendication 1, comprenant en outre l'étape consistant à comparer la limite de sécurité à la quantité de matières extractibles déterminée sur le substrat d'emballage imprimé par impression à jet d'encre.

3. Procédé de fabrication selon la revendication 1 ou 2, **caractérisé en ce que** l'acrylate d'éther vinylique selon la Formule (I) est l'acrylate de 2-(2'-vinyloxyéthoxy)-éthyle.

4. Procédé de fabrication selon l'une quelconque des revendications 1 à 3, **caractérisé en ce que** la multitude d'encres pour impression à jet d'encre comprend au moins un photo-initiateur choisi parmi le groupe composé d'un photo-initiateur d'oxyde de phosphine d'acyle et d'un photo-initiateur de thioxanthone polymérisable et polymère.

5. Procédé de fabrication selon la revendication 4, **caractérisé en ce que** le photo-initiateur de thioxanthone polymérisable répond à la Formule (II):

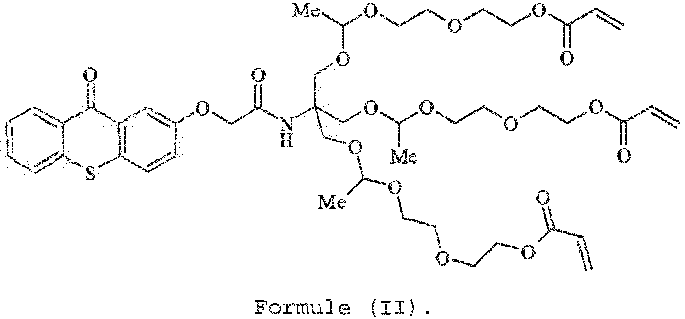

6. Procédé de fabrication selon l'une quelconque des revendications 1 à 5, **caractérisé en ce que** la limite de sécurité est contenue dans l'ensemble de métadonnées sous forme de code de référence.

7. Procédé de fabrication selon la revendication 6, **caractérisé en ce que** le code de référence fait partie de l'image obtenue après l'étape d'impression à jet d'encre.

8. Procédé de fabrication selon la revendication 7, **caractérisé en ce que** le code de référence est contenu dans un code 2D dans l'image.

9. Procédé de fabrication selon la revendication 7 ou 8, **caractérisé en ce que** le code de référence est utilisé pour récupérer la limite de sécurité du serveur de validation d'impression.

10. Procédé de fabrication selon l'une quelconque des revendications 1 à 9, **caractérisé en ce que** le transfert d'un ou de plusieurs fichiers comprenant l'ensemble de sélections de couleurs et l'ensemble de métadonnées vers un serveur d'impression à jet d'encre comprend les étapes consistant à:
- regrouper l'ensemble de sélections de couleurs et l'ensemble de métadonnées dans un fichier conteneur,
- transférer le fichier conteneur vers un serveur d'impression à jet d'encre, et
- dégrouper le fichier conteneur sur le serveur d'impression à jet d'encre en ledit ensemble de sélections de couleurs et ledit ensemble de métadonnées.

11. Procédé de fabrication selon l'une quelconque des revendications 1 à 10, **caractérisé en ce que** la définition d'emballage comprenant la partie de contenu d'image et la partie de contenu de fabrication mémorisées sur le serveur de validation d'impression est entrée par un créateur d'emballage.

12. Procédé de fabrication selon l'une quelconque des revendications 1 à 12, **caractérisé en ce qu'**un code de suivi pour track-and-trace est compris dans les métadonnées et/ou au moins l'un des fichiers de sélections de couleurs.

13. Procédé de fabrication selon la revendication 13, **caractérisé en ce que** le code de suivi pour track-and-trace est contenu dans un code 2D compris dans l'image.

14. Emballage imprimé par impression à jet d'encre pour produits alimentaires, cosmétiques et pharmaceutiques, comprenant une image comprenant un code 2D comprenant un code de référence pour récupérer une limite de sécurité du composant d'encre SML et/ou dudit au moins un acrylate d'éther vinylique extractible selon la Formule (I): 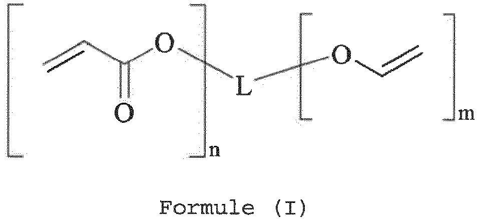 où
L représente un groupe de liaison comprenant deux à dix atomes de carbone, et
n et m représentent, indépendamment l'un de l'autre, une valeur de 1 à 5, et **caractérisé en ce que** le composant d'encre SML est un composé de la section A ou B dans l'ordonnance suisse SR 817.023.21 du 23 novembre 2011 (état du 1 avril 2013).

15. Utilisation d'un programme de logiciel pour la création d'un code de référence pour récupérer une limite de sécurité d'un composant d'encre SML et/ou d'un acrylate d'éther vinylique extractible selon la Formule (I): 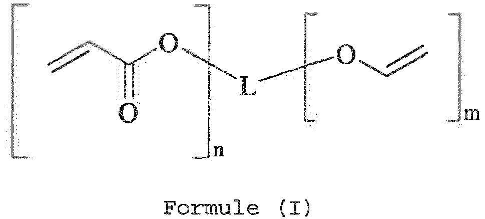 où
L représente un groupe de liaison comprenant deux à dix atomes de carbone, et
n et m représentent, indépendamment l'un de l'autre, une valeur de 1 à 5,
sur un emballage imprimé par impression à jet d'encre pour produits alimentaires, cosmétiques et pharmaceutiques, comprenant dans l'image un code 2D comprenant un code de suivre pour track-and-trace, **caractérisé en ce que** le composant d'encre SML est un composé de la section A ou B dans l'ordonnance suisse SR 817.023.21 du 23 novembre 2011 (état du 1 avril 2013).
